(19) Europäisches Patentamt / European Patent Office / Office européen des brevets

(11) **EP 4 786 527 A1**

(12) **EUROPEAN PATENT APPLICATION**
published in accordance with Art. 153(4) EPC

(43) Date of publication:
05.08.2026 Bulletin 2026/32

(21) Application number: 24872095.5

(22) Date of filing: 20.09.2024

(51) International Patent Classification (IPC):
*C08J 5/04* (2006.01)    *C08G 18/00* (2006.01)
*C08G 18/08* (2006.01)    *C08G 18/42* (2006.01)
*C08G 18/44* (2006.01)    *C08G 18/48* (2006.01)
*C08G 18/72* (2006.01)    *C08K 3/26* (2006.01)
*C08K 7/14* (2006.01)    *C08L 75/04* (2006.01)
*C08G 101/00* (2006.01)

(52) Cooperative Patent Classification (CPC):
**C08G 18/00; C08G 18/08; C08G 18/42;
C08G 18/44; C08G 18/48; C08G 18/72; C08J 5/04;
C08K 3/26; C08K 7/14; C08L 75/04;** C08G 2101/00

(86) International application number:
**PCT/JP2024/033679**

(87) International publication number:
**WO 2025/070304 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 27.09.2023 JP 2023166195
27.03.2024 JP 2024052096

(71) Applicant: Sekisui Chemical Co., Ltd.
Osaka-shi, Osaka 530-8565 (JP)

(72) Inventors:
• SHINOHARA, Fumikazu
Ritto-shi, Shiga 520-3027 (JP)
• KINOSHITA, Shinya
Ritto-shi, Shiga 520-3027 (JP)
• TANABE, Tomoaki
Ritto-shi, Shiga 520-3027 (JP)
• ASANO, Ryouji
Ritto-shi, Shiga 520-3027 (JP)

(74) Representative: **Ter Meer Steinmeister & Partner
Patentanwälte mbB
Nymphenburger Straße 4
80335 München (DE)**

(54) **CURABLE RESIN COMPOSITION, RESIN MOLDED BODY, AND METHOD FOR PRODUCING RESIN MOLDED BODY**

(57) Provided is a curable resin composition capable of obtaining a resin molded body excellent in acid resistance despite the use of calcium carbonate particles. A curable resin composition according to the present invention contains: a polyol compound; an isocyanate compound; reinforcing long fibers; and calcium carbonate particles, an average particle size of the calcium carbonate particles being 8.5 $\mu$m or more, and a content of the calcium carbonate particles being 40 parts by weight or more and 240 parts by weight or less with respect to 100 parts by weight of a total of the polyol compound and the isocyanate compound.

[FIG. 1]

EP 4 786 527 A1

## Description

### TECHNICAL FIELD

The present invention relates to a curable resin composition containing a polyol compound and an isocyanate compound. The present invention also relates to a resin molded body containing a urethane resin and a method for producing the same.

### BACKGROUND ART

In recent years, a resin molded body may be used as a structural material such as a building material, instead of wood or the like. For example, as a railroad crosstie, a crosstie of a resin molded body may be used instead of a wooden crosstie and a concrete crosstie. In use applications other than the crosstie, a resin molded body may be used instead of wood or the like.

As an example of such a resin molded body, Patent Document 1 below discloses a resin molded body obtained by molding a resin composition containing 1 wt% to 15 wt% of glass fibers and 30 wt% to 85 wt% of fly ash having a diameter distribution of 5 $\mu$m to 200 $\mu$m. In Examples of Patent Document 1, a resin composition is prepared by mixing a polyol compound, an isocyanate compound, a filler, glass fibers, and a catalyst in an extruder, and then a resin molded body is prepared by pressing and extruding the resin composition into a mold via an extruder head.

Patent Document 2 below discloses a fiber-reinforced resin molded article (resin molded body) formed by foaming and curing a urethane resin composition. The urethane resin composition contains a urethane resin component, long glass fibers, and a filler having a specific gravity of 4.0 or more. In Patent Document 2, the content of the filler having a specific gravity of 4.0 or more is 15 parts by weight to 70 parts by weight with respect to 100 parts by weight of the urethane resin component.

Patent Document 3 below discloses a foamed urethane resin molded article in which a longitudinal direction is reinforced with glass long fibers. The front surface layer or the back surface layer of the foamed urethane resin molded article contains a urethane resin foam and a solid filler.

Patent Document 4 below discloses a curable resin composition containing a polyol compound, an isocyanate compound, reinforcing long fibers, and a filler. In the curable resin composition, the specific gravity of the filler is less than 4, and the average circularity of the filler is 0.65 or more.

### Related Art Document

### Patent Documents

    Patent Document 1: WO 2007/014332 A2
    Patent Document 2: JP 2003-41013 A
    Patent Document 3: JP 2001-246632 A
    Patent Document 4: WO 2020/054056 A1

### SUMMARY OF THE INVENTION

### PROBLEMS TO BE SOLVED BY THE INVENTION

The resin molded body may be disposed outdoors for use. The resin molded body disposed outdoors for use may be exposed to an acidic environment due to acid rain or the like.

Incidentally, in order to suppress the cost of the resin molded body, it is conceivable to use calcium carbonate particles as a filler. However, the present inventors have found that when calcium carbonate particles are simply used, the acid resistance of the resin molded body is low, and acid rain or the like easily permeates the inside of the resin molded body.

An object of the present invention is to provide a curable resin composition capable of obtaining a resin molded body excellent in acid resistance despite the use of calcium carbonate particles. Another object of the present invention is to provide a resin molded body excellent in acid resistance despite the use of calcium carbonate particles, and a method for producing the same.

**MEANS FOR SOLVING THE PROBLEMS**

In the present specification, the following curable resin composition, resin molded body, and method for producing a resin molded body are disclosed.

Item 1. A curable resin composition containing: a polyol compound; an isocyanate compound; reinforcing long fibers; and calcium carbonate particles, an average particle size of the calcium carbonate particles being 8.5 μm or more, and a content of the calcium carbonate particles being 40 parts by weight or more and 240 parts by weight or less with respect to 100 parts by weight of a total of the polyol compound and the isocyanate compound.

Item 2. The curable resin composition according to item 1, in which the average particle size of the calcium carbonate particles is 10 μm or more.

Item 3. The curable resin composition according to item 1 or 2, in which surfaces of the calcium carbonate particles are not treated with a surface treatment agent.

Item 4. The curable resin composition according to any one of items 1 to 3, in which a fiber length of the reinforcing long fibers is 50 mm or more.

Item 5. The curable resin composition according to any one of items 1 to 4, in which a content of the reinforcing long fibers is 40 parts by weight or more and 380 parts by weight or less with respect to 100 parts by weight of the total of the polyol compound and the isocyanate compound.

Item 6. The curable resin composition according to any one of items 1 to 5, in which the reinforcing long fibers are glass long fibers.

Item 7. The curable resin composition according to any one of items 1 to 6, in which a volume content ratio of the calcium carbonate particles in 100 vol% of the curable resin composition is 6 vol% or more and 19 vol% or less.

Item 8. The curable resin composition according to any one of items 1 to 7, containing a foaming agent.

Item 9. A resin molded body containing: a urethane resin; reinforcing long fibers; and calcium carbonate particles, an average particle size of the calcium carbonate particles being 8.5 μm or more, and a content of the calcium carbonate particles being 40 parts by weight or more and 240 parts by weight or less with respect to 100 parts by weight of the urethane resin.

Item 10. The resin molded body according to item 9, in which the average particle size of the calcium carbonate particles is 10 μm or more.

Item 11. The resin molded body according to item 9 or 10, in which surfaces of the calcium carbonate particles are not treated with a surface treatment agent.

Item 12. The resin molded body according to any one of items 9 to 11, in which a volume content ratio of the calcium carbonate particles in 100 vol% of the resin molded body is 6 vol% or more and 19 vol% or less.

Item 13. The resin molded body according to any one of items 9 to 12, in which a fiber length of the reinforcing long fibers is 50 mm or more.

Item 14. The resin molded body according to any one of items 9 to 13, in which the reinforcing long fibers are glass long fibers.

Item 15. The resin molded body according to any one of items 9 to 14, in which a volume content ratio of the calcium carbonate particles in 100 vol% of the resin molded body is 6 vol% or more and 19 vol% or less.

Item 16. The resin molded body according to any one of items 9 to 15, which is a foamed resin molded body.

Item 17. The resin molded body according to item 16, in which an expansion ratio of the urethane resin is 1.1 times or more and 5 times or less.

Item 18. The resin molded body according to any one of items 9 to 17, which is a crosstie.

Item 19. A method for producing the resin molded body according to any one of items 9 to 18, the method including: a step of obtaining a first composition containing a polyol compound, an isocyanate compound, and calcium carbonate particles; an impregnation step of impregnating the first composition between reinforcing long fibers to obtain a curable resin composition; and a curing step of curing the curable resin composition in a mold, a content of the calcium carbonate particles in the first composition being 40 parts by weight or more and 240 parts by weight or less with respect to 100 parts by weight of a total of the polyol compound and the isocyanate compound in the first composition.

Item 20. The method for producing the resin molded body according to item 19, in which a fiber length of the reinforcing long fibers is 50 mm or more.

Item 21. The method for producing the resin molded body according to item 19 or 20, in which in the impregnation step, the first composition is impregnated between the reinforcing long fibers so that a content of the reinforcing long fibers is 20 parts by weight or more and 150 parts by weight or less with respect to 100 parts by weight of the first composition.

Item 22. The method for producing the resin molded body according to any one of items 19 to 21, in which the reinforcing long fibers are glass long fibers.

Item 23. The method for producing the resin molded body according to any one of items 19 to 22, in which the first composition contains a foaming agent, and in the curing step, the curable resin composition is foamed and cured in a mold.

Item 24. The method for producing the resin molded body according to any one of items 19 to 23, which is a method for producing a resin molded body used as a crosstie.

**EFFECT OF THE INVENTION**

A curable resin composition according to the present invention contains a polyol compound, an isocyanate compound, reinforcing long fibers, and calcium carbonate particles, in which an average particle size of the calcium carbonate particles is 8.5 $\mu$m or more. In the curable resin composition according to the present invention, a content of the calcium carbonate particles is 40 parts by weight or more and 240 parts by weight or less with respect to 100 parts by weight of a total of the polyol compound and the isocyanate compound. Since the curable resin composition according to the present invention has the above configuration, a resin molded body excellent in acid resistance can be obtained despite the use of calcium carbonate particles.

A resin molded body according to the present invention contains a urethane resin, reinforcing long fibers, and calcium carbonate particles, in which an average particle size of the calcium carbonate particles is 8.5 $\mu$m or more. In the resin molded body according to the present invention, a content of the calcium carbonate particles is 40 parts by weight or more and 240 parts by weight or less with respect to 100 parts by weight of the urethane resin. Since the resin molded body according to the present invention has the above configuration, acid resistance is excellent despite the use of calcium carbonate particles.

**BRIEF DESCRIPTION OF DRAWINGS**

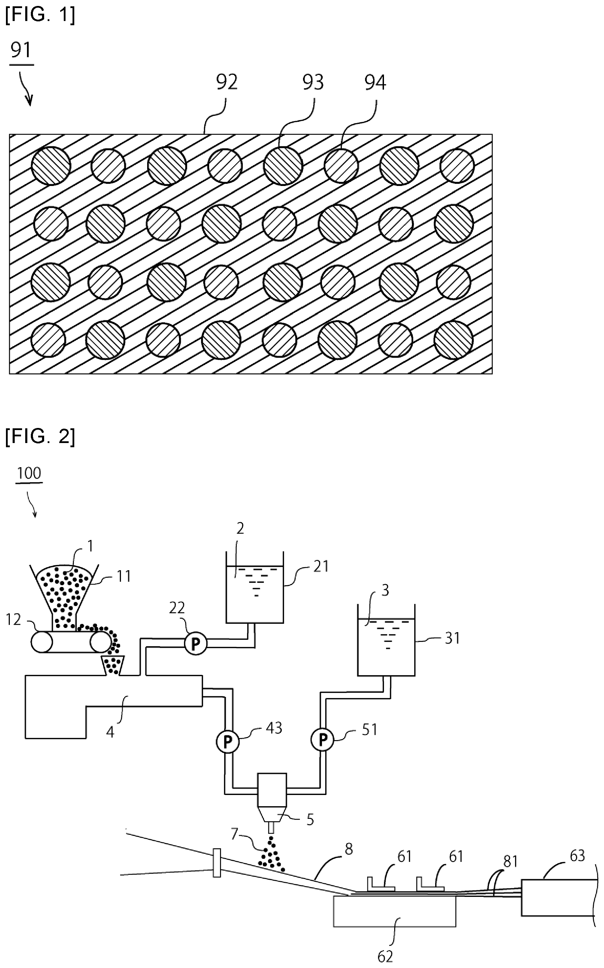

[Fig. 1] Fig. 1 is a cross-sectional view schematically showing a resin molded body according to an embodiment of the present invention.

[Fig. 2] Fig. 2 is a diagram for explaining a method for producing a resin molded body according to an embodiment of the present invention.

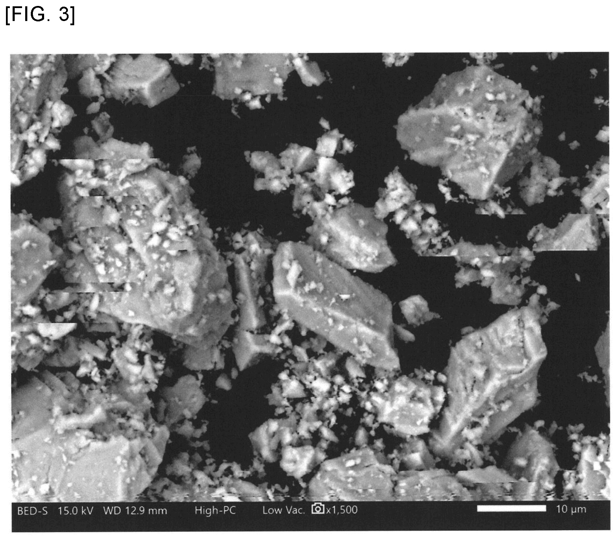

[Fig. 3] Fig. 3 is an electron micrograph of calcium carbonate particles A (average particle size: 22 $\mu$m) used in Example.

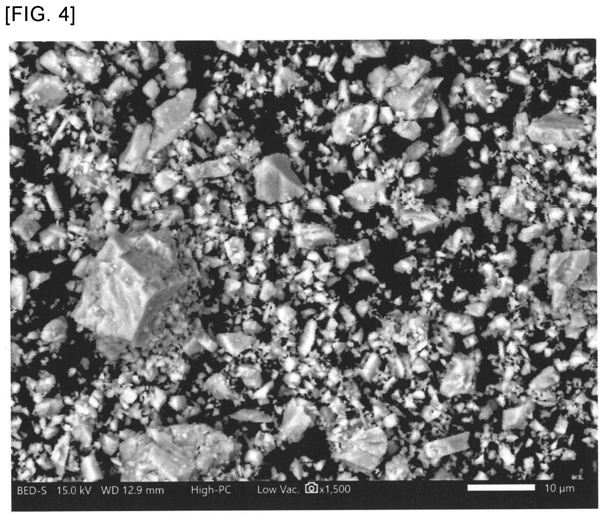

[Fig. 4] Fig. 4 is an electron micrograph of calcium carbonate particles X (average particle size: 5.5 $\mu$m) used in Comparative Example.

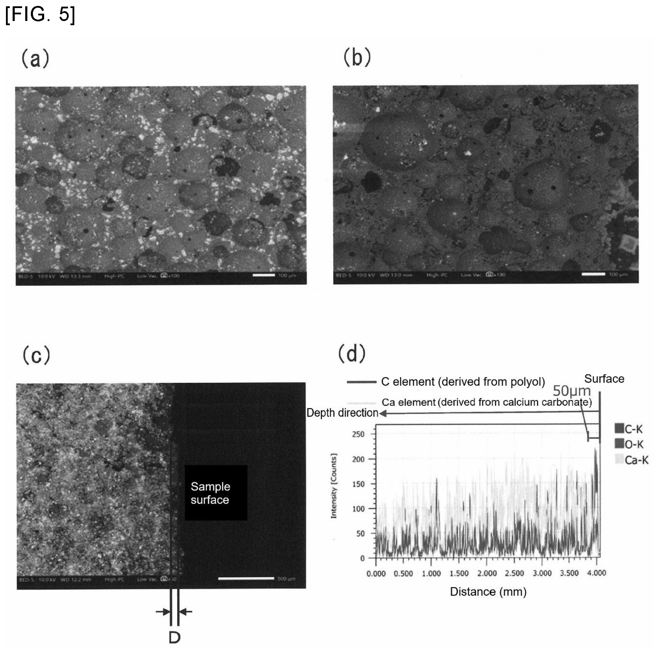

[Fig. 5] Fig. 5 shows results when a test was performed using an acidic solution A in Example 1. Fig. 5(a) is a micrograph of the surface of an evaluation sample before immersion in the acidic solution A, Fig. 5(b) is a micrograph of the surface of the evaluation sample after immersion in the acidic solution A, Fig. 5(c) is a micrograph of the cross section of the evaluation sample after immersion in the acidic solution A, and Fig. 5(d) is an elemental analysis result of the evaluation sample after immersion in the acidic solution A.

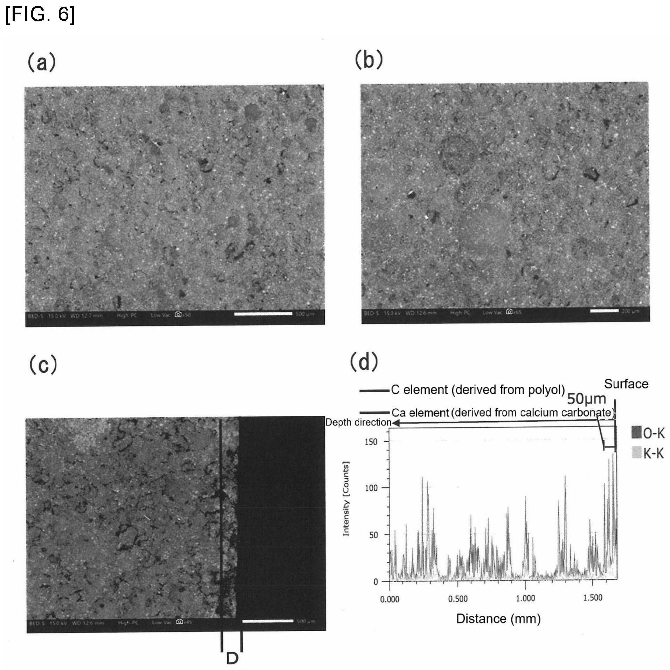

[Fig. 6] Fig. 6 shows results when a test was performed using an acidic solution A in Example 2. Fig. 6(a) is a micrograph of the surface of an evaluation sample before immersion in the acidic solution A, Fig. 6(b) is a micrograph of the surface of the evaluation sample after immersion in the acidic solution A, Fig. 6(c) is a micrograph of the cross section of the evaluation sample after immersion in the acidic solution A, and Fig. 6(d) is an elemental analysis result of the evaluation sample after immersion in the acidic solution A.

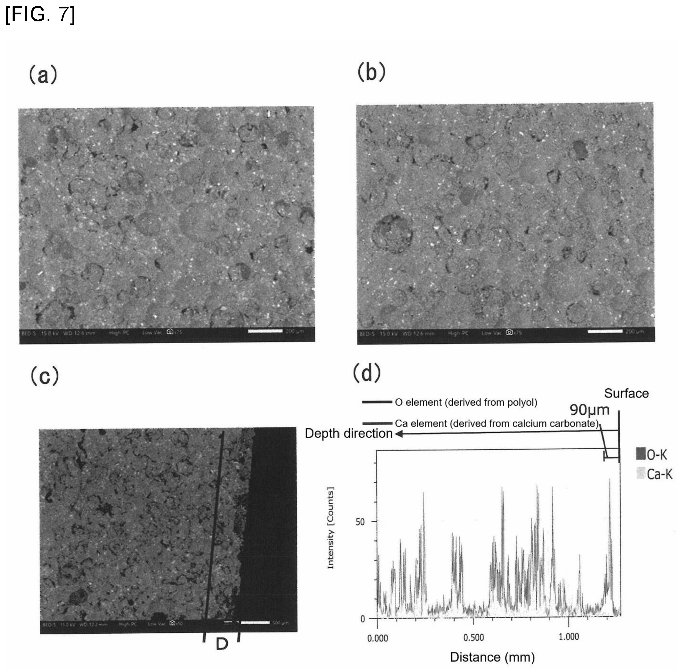

[Fig. 7] Fig. 7 shows results when a test was performed using an acidic solution A in Example 3. Fig. 7(a) is a micrograph of the surface of an evaluation sample before immersion in the acidic solution A, Fig. 7(b) is a micrograph of the surface of the evaluation sample after immersion in the acidic solution A, Fig. 7(c) is a micrograph of the cross section of the evaluation sample after immersion in the acidic solution A, and Fig. 7(d) is an elemental analysis result of the evaluation sample after immersion in the acidic solution A.

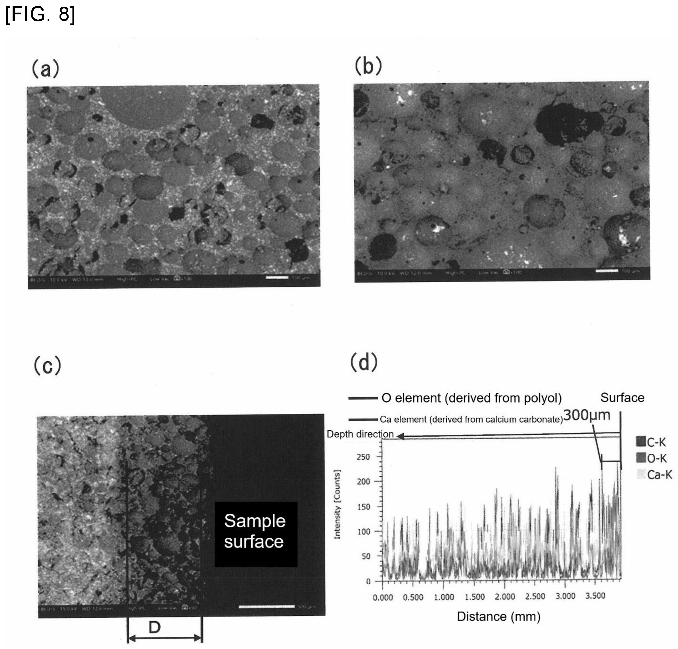

[Fig. 8] Fig. 8 shows results when a test was performed using an acidic solution A in Comparative Example 1. Fig. 8(a) is a micrograph of the surface of an evaluation sample before immersion in the acidic solution A, Fig. 8(b) is a micrograph of the surface of the evaluation sample after immersion in the acidic solution A, Fig. 8(c) is a micrograph of the cross section of the evaluation sample after immersion in the acidic solution A, and Fig. 8(d) is an elemental analysis result of the evaluation sample after immersion in the acidic solution A.

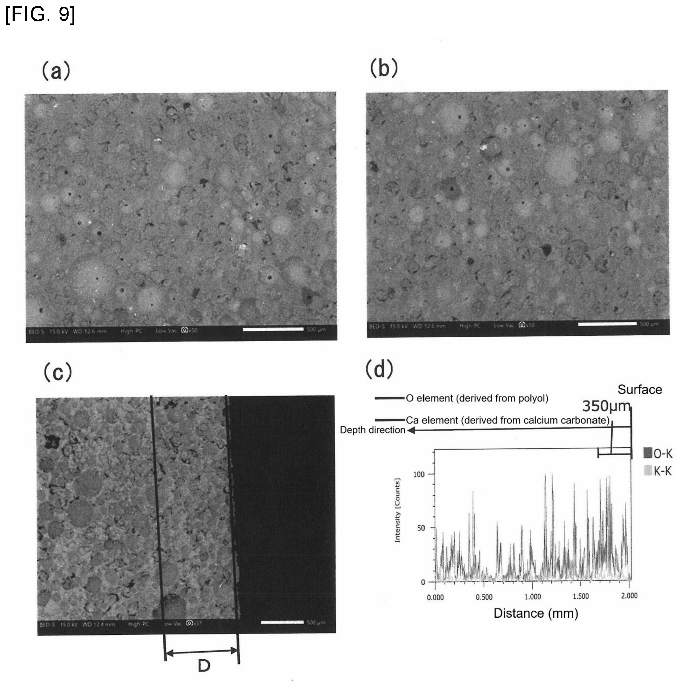

[Fig. 9] Fig. 9 shows results when a test was performed using an acidic solution A in Comparative Example 2. Fig. 9(a) is a micrograph of the surface of an evaluation sample before immersion in the acidic solution A, Fig. 9(b) is a micrograph of the surface of the evaluation sample after immersion in the acidic solution A, Fig. 9(c) is a micrograph of the cross section of the evaluation sample after immersion in the acidic solution A, and Fig. 9(d) is an elemental analysis result of the evaluation sample after immersion in the acidic solution A.

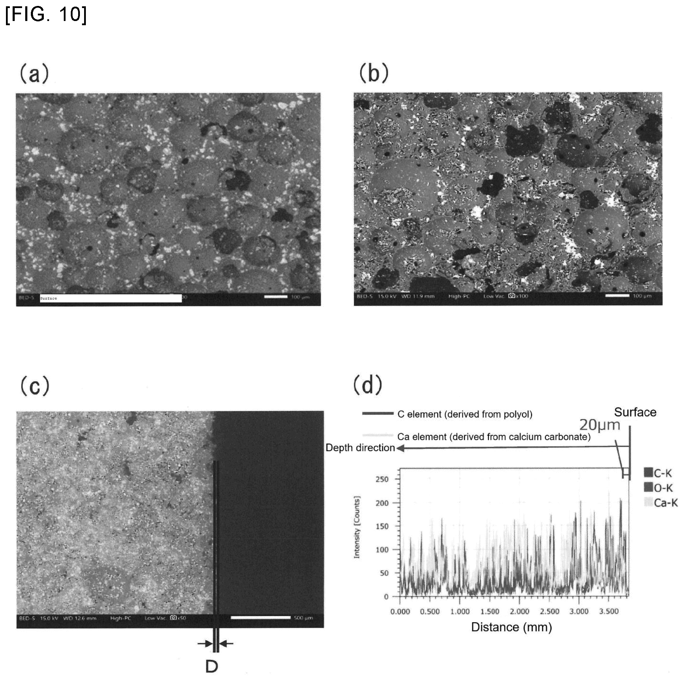

[Fig. 10] Fig. 10 shows results when a test was performed using an acidic solution B in Example 1. Fig. 10(a) is a micrograph of the surface of an evaluation sample before immersion in the acidic solution B, Fig. 10(b) is a micrograph of the surface of the evaluation sample after immersion in the acidic solution B, Fig. 10(c) is a micrograph of the cross section of the evaluation sample after immersion in the acidic solution B, and Fig. 10(d) is an elemental analysis result of the evaluation sample after immersion in the acidic solution B.

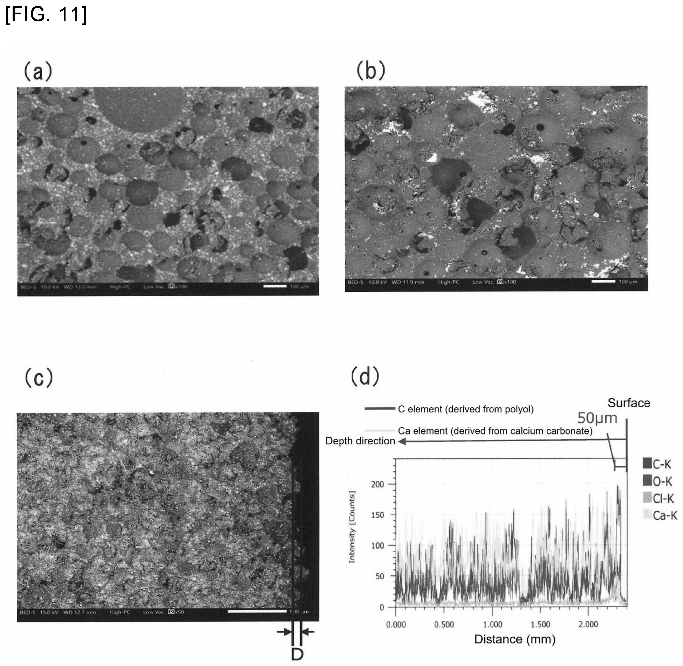

[Fig. 11] Fig. 11 shows results when a test was performed using an acidic solution B in Comparative Example 1. Fig. 11(a) is a micrograph of the surface of an evaluation sample before immersion in the acidic solution B, Fig. 11(b) is a micrograph of the surface of the evaluation sample after immersion in the acidic solution B, Fig. 11(c) is a micrograph of the cross section of the evaluation sample after immersion in the acidic solution B, and Fig. 11(d) is an elemental analysis result of the evaluation sample after immersion in the acidic solution B.

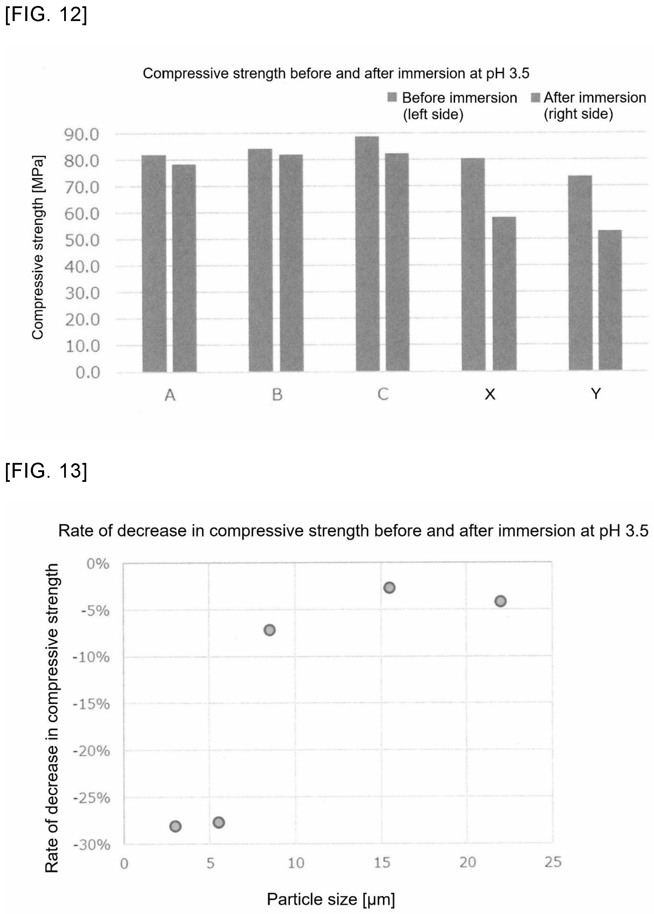

[Fig. 12] Fig. 12 shows results of a compressive strength obtained by performing a compression test on evaluation samples before and after immersion in an acidic solution A in Examples 1 to 3 and Comparative Examples 1 and 2.

[Fig. 13] Fig. 13 shows results of a rate of decrease in compressive strength obtained by performing a compression test on evaluation samples before and after immersion in an acidic solution A in Examples 1 to 3 and Comparative Examples 1 and 2.

## MODES FOR CARRYING OUT THE INVENTION

Hereinafter, details of the present invention will be described.

[Present invention (first invention)]

In the present specification, the following present invention (first invention) (resin composition and resin molded body) is disclosed.

A curable resin composition according to the present invention contains a polyol compound, an isocyanate compound, reinforcing long fibers, and calcium carbonate particles, in which an average particle size of the calcium carbonate particles is 8.5 $\mu$m or more. In the curable resin composition according to the present invention, a content of the calcium carbonate particles is 40 parts by weight or more and 240 parts by weight or less with respect to 100 parts by weight of a total of the polyol compound and the isocyanate compound.

Since the curable resin composition according to the present invention has the above configuration, a resin molded body excellent in acid resistance can be obtained despite the use of calcium carbonate particles.

A resin molded body obtained by molding a curable resin composition may be exposed to an acidic environment due to acid rain or the like. The present inventors have found that when the average particle size of the calcium carbonate particles is small, the calcium carbonate particles are likely to be densely packed on the surface of the resin molded body (the surface of a foamed resin molded body and the surface of a cell wall when the resin molded body is a foamed resin molded body). Then, the present inventors have found that when the average particle size of the calcium carbonate particles is small, the calcium carbonate particles dissolve by an acid, and acid rain or the like easily permeates the inside of the resin molded body.

On the other hand, in the curable resin composition according to the present invention, since calcium carbonate particles having a relatively large average particle size are used in a specific content, the calcium carbonate particles are less likely to have resistance in the curable resin composition, and the viscosity of the curable resin composition is less likely to increase. For this reason, the calcium carbonate particles easily enter between the reinforcing long fibers, and the calcium carbonate particles are easily uniformly dispersed in the curable resin composition. As a result, a resin molded body in which calcium carbonate particles are uniformly dispersed can be obtained. Since calcium carbonate particles having a relatively large average particle size are used, it is difficult for the calcium carbonate particles to completely dissolve by an acid. Therefore, permeation of acid rain or the like into the resin molded body can be effectively suppressed, and the acid resistance of the resin molded body can be enhanced.

Note that a urethane resin can be obtained by reacting the polyol compound and the isocyanate compound in the presence of a catalyst.

In the curable resin composition according to the present invention, the average particle size of the calcium carbonate particles is preferably 10 $\mu$m or more. In the case of using calcium carbonate particles having an average particle size of 10 $\mu$m or more, the effect of the present invention can be more effectively exhibited as compared with the case of using calcium carbonate particles having an average particle size of 8.5 $\mu$m or more and less than 10 $\mu$m. That is, in the case of using calcium carbonate particles having an average particle size of 10 $\mu$m or more, a resin molded body having considerably excellent acid resistance can be obtained.

A resin molded body according to the present invention contains a urethane resin, reinforcing long fibers, and calcium carbonate particles, in which an average particle size of the calcium carbonate particles is 8.5 $\mu$m or more. In the resin molded body according to the present invention, a content of the calcium carbonate particles is 40 parts by weight or more and 240 parts by weight or less with respect to 100 parts by weight of the urethane resin.

Since the resin molded body according to the present invention has the above configuration, acid resistance is excellent despite the use of calcium carbonate particles.

EP 4 786 527 A1

In the resin molded body according to the present invention, the average particle size of the calcium carbonate particles is preferably 10 $\mu$m or more. In the case of using calcium carbonate particles having an average particle size of 10 $\mu$m or more, the effect of the present invention can be more effectively exhibited as compared with the case of using calcium carbonate particles having an average particle size of 8.5 $\mu$m or more and less than 10 $\mu$m. That is, in the case of using calcium carbonate particles having an average particle size of 10 $\mu$m or more, the resin molded body is considerably excellent in acid resistance.

The resin molded body according to the present invention can be obtained, for example, by curing the curable resin composition.

Fig. 1 is a cross-sectional view schematically showing a resin molded body according to an embodiment of the present invention.

A resin molded body 91 shown in Fig. 1 contains a urethane resin 92, reinforcing long fibers 93, and calcium carbonate particles 94. In Fig. 1, a cross section along a fiber diameter direction of the reinforcing long fibers 93 is shown.

Hereinafter, details of the components contained in the curable resin composition according to the present invention and the components constituting the resin molded body according to the present invention will be described.

[Polyol compound]

The polyol compound is a compound having two or more hydroxyl groups (-OH groups).

Examples of the polyol compound contained in the curable resin composition include polylactone polyol, polycarbonate polyol, aromatic polyol, alicyclic polyol, aliphatic polyol, polyester polyol, and polyether polyol. The polyol compound may be a polymer polyol. Only one kind of the polyol compound may be used, or two or more kinds thereof may be used in combination.

Examples of the polylactone polyol include polypropiolactone glycol, polycaprolactone glycol, and polyvalerolactone glycol.

Examples of the polycarbonate polyol include a dealcoholization reaction product of a hydroxyl group-containing compound and a carbonate compound. Examples of the hydroxyl group-containing compound include ethylene glycol, propylene glycol, butanediol, pentanediol, hexanediol, octanediol, and nonanediol. Examples of the carbonate compound include diethylene carbonate and dipropylene carbonate.

Examples of the aromatic polyol include bisphenol A, bisphenol F, phenol novolac, and cresol novolac.

Examples of the alicyclic polyol include cyclohexanediol, methylcyclohexanediol, isophoronediol, dicyclohexylmethanediol, and dimethyldicyclohexylmethanediol.

Examples of the aliphatic polyol include ethylene glycol, propylene glycol, butanediol, pentanediol, and hexanediol.

Examples of the polyester polyol include a dehydration condensation product of a polybasic acid and a polyhydric alcohol, a ring-opening polymerization product of a lactone, and a condensation product of a hydroxycarboxylic acid and a polyhydric alcohol. Examples of the polybasic acid include adipic acid, azelaic acid, sebacic acid, terephthalic acid, isophthalic acid, and succinic acid. Examples of the polyhydric alcohol include bisphenol A, ethylene glycol, 1,2-propylene glycol, 1,4-butanediol, diethylene glycol, 1,6-hexane glycol, and neopentyl glycol. Examples of the lactone include $\varepsilon$-caprolactone and $\alpha$-methyl-$\varepsilon$-caprolactone. Examples of the hydroxycarboxylic acid include castor oil and a reaction product of castor oil and ethylene glycol.

Examples of the polyether polyol include a ring-opening polymer of an active hydrogen compound having two or more active hydrogen atoms and an alkylene oxide. Examples of the alkylene oxide include ethylene oxide, propylene oxide, and tetrahydrofuran. The active hydrogen compound preferably has a small molecular weight. Examples of the active hydrogen compound include diol compounds such as bisphenol A, ethylene glycol, propylene glycol, butylene glycol, and 1,6-hexanediol; triol compounds such as glycerin and trimethylolpropane; and amine compounds such as ethylenediamine and butylenediamine.

Examples of the polymer polyol include a graft polymer obtained by graft polymerization of an unsaturated organic compound to a polyol compound, a polybutadiene polyol, a modified polyol of a polyhydric alcohol, and hydrogenated products thereof.

Examples of the polyol compound in the graft polymer include aromatic polyol, alicyclic polyol, aliphatic polyol, polyester polyol, and polyether polyol. Examples of the unsaturated organic compound in the graft polymer include acrylonitrile, styrene, methyl acrylate, and methyl methacrylate.

Examples of the modified polyol of the polyhydric alcohol include a reaction modified product of a polyhydric alcohol and an alkylene oxide. Examples of the polyhydric alcohol include trihydric alcohols such as glycerin and trimethylolpropane; tetrahydric to octavalent alcohols such as pentaerythritol, sorbitol, mannitol, sorbitan, diglycerin, dipentaerythritol, sucrose, glucose, mannose, fructose, methylglucoside, and derivatives thereof; phenol compounds such as phenol, phloroglucin, cresol, pyrogallol, catechol, hydroquinone, bisphenol A, bisphenol F, bisphenol S, 1-hydroxynaphthalene, 1,3,6,8-tetrahydroxynaphthalene, anthrol, 1,4,5,8-tetrahydroxyanthracene, and 1-hydroxypyrene;

polybutadiene polyols; castor oil polyols; (co)polymers of hydroxyalkyl (meth)acrylate; polyfunctional (for example, 2 or more and 100 or less functional groups) polyols such as polyvinyl alcohol; and condensates (novolac) of phenol and formaldehyde. Examples of the alkylene oxide include alkylene oxides having 2 to 6 carbon atoms. Specific examples of the alkylene oxide include ethylene oxide, 1,2-propylene oxide, 1,3-propylene oxide, 1,2-butylene oxide, and 1,4-butylene oxide. From the viewpoint of improving properties and reactivity, the alkylene oxide is preferably 1,2-propylene oxide, ethylene oxide, or 1,2-butylene oxide, and more preferably 1,2-propylene oxide or ethylene oxide. Only one kind of the alkylene oxide may be used, or two or more kinds thereof may be used in combination.

The form of addition when two or more kinds of the alkylene oxides are used may be block addition, random addition, or both block addition and random addition.

From the viewpoint of enhancing the dispersibility of the calcium carbonate particles, the polyol compound is preferably a polyester polyol or a polyether polyol.

The viscosity of the polyol compound at 12°C is preferably 200 cps or more and more preferably 300 cps or more, and is preferably 1000 cps or less and more preferably 800 cps or less. When the viscosity is the above lower limit or more and the above upper limit or less, the portion between the reinforcing long fibers is more easily impregnated with calcium carbonate particles in the curable resin composition, and the abrasion resistance, the flexural modulus, the flexural strength, and the compressive strength of the resin molded body can be enhanced.

The viscosity at 12°C can be measured using, for example, a Brookfield viscometer.

[Isocyanate compound]

The isocyanate compound is a compound having one or more isocyanate groups (-NCO groups).

Examples of the isocyanate compound contained in the curable resin composition include aromatic polyisocyanate, alicyclic polyisocyanate, and aliphatic polyisocyanate. From the viewpoint of efficiently advancing the curing reaction, the isocyanate compound is preferably a polyisocyanate compound. Only one kind of the isocyanate compound may be used, or two or more kinds thereof may be used in combination.

Examples of the aromatic polyisocyanate include phenylene diisocyanate, tolylene diisocyanate, xylylene diisocyanate, diphenylmethane diisocyanate, dimethyldiphenylmethane diisocyanate, triphenylmethane triisocyanate, naphthalene diisocyanate, and polymethylene polyphenyl polyisocyanate.

Examples of the alicyclic polyisocyanate include cyclohexylene diisocyanate, methylcyclohexylene diisocyanate, isophorone diisocyanate, dicyclohexylmethane diisocyanate, and dimethyldicyclohexylmethane diisocyanate.

Examples of the aliphatic polyisocyanate include methylene diisocyanate, ethylene diisocyanate, propylene diisocyanate, tetramethylene diisocyanate, and hexamethylene diisocyanate.

From the viewpoint of easy availability and excellent convenience, the isocyanate compound is preferably diphenylmethane diisocyanate.

The polyol compound and the isocyanate compound can be used in an appropriate blending amount so as to efficiently form a urethane bond. From the viewpoint of enhancing the reaction efficiency, the content of the isocyanate compound is preferably 100 parts by weight or more, more preferably 120 parts by weight or more, and still more preferably 130 parts by weight or more, and is preferably 180 parts by weight or less, more preferably 160 parts by weight or less, and still more preferably 150 parts by weight or less, with respect to 100 parts by weight of the polyol compound. When the content of the isocyanate compound is the above lower limit or more and the above upper limit or less, the amount of the unreacted polyol compound or the unreacted isocyanate compound is reduced, and a resin molded body having better flexural modulus, flexural strength, and compressive strength is easily formed.

[Reinforcing long fibers]

The reinforcing long fibers are reinforcing fibers and are long fibers. The reinforcing fiber is a fibrous material having a certain strength. As the reinforcing fibers, for example, carbon fibers, glass fibers, aramid fibers, and the like are known. The fiber length of the long fibers is, for example, 50 mm or more in average fiber length. The reinforcing long fibers may be a reinforcing long fiber sheet.

Examples of the reinforcing long fibers contained in the curable resin composition and the resin molded body include carbon long fibers, glass long fibers, aramid long fibers, and long reinforcing fibers. Only one kind of the reinforcing long fibers may be used, or two or more kinds thereof may be used in combination.

From the viewpoint of further enhancing the flexural modulus, the flexural strength, and the compressive strength of the resin molded body, the reinforcing long fibers are preferably glass long fibers. The glass long fiber is a fibrous material obtained by melting and pulling glass into a fibrous form.

From the viewpoint of further enhancing the flexural modulus, the flexural strength, and the compressive strength of the resin molded body, the fiber length of the reinforcing long fibers is preferably 50 mm or more and more preferably 70 mm or more. The reinforcing long fibers can be cut into a desired size after pultrusion molding, and the fiber length of the reinforcing long fibers can be appropriately changed depending on the length to be cut, so that the upper limit of the fiber length of the reinforcing long fibers is not particularly limited. Even when the reinforcing long fibers have a long fiber length, the reinforcing long fibers are impregnated with a composition containing components other than the reinforcing long fibers, so that the reinforcing long fibers are less likely to be cut or entangled. By pultrusion molding, molding can be performed even when the blending ratio of the reinforcing long fibers is increased. The fiber length of the reinforcing long fibers may be equal to or less than the maximum length of the resin molded body, may be 10,000 mm or less, may be 1000 mm or less, or may be 500 mm or less.

The reinforcing long fibers are preferably fibers obtained by aligning and roving monofilaments. The fiber diameter of the monofilament is preferably 1 μm or more and more preferably 2 μm or more, and is preferably 50 μm or less and more preferably 40 μm or less.

The average fiber diameter of the reinforcing long fibers is a number average fiber diameter, and is an arithmetic average value of fiber diameters of randomly selected 100 fibers. The fiber diameter means the diameter of the equivalent circle diameter of the cross section along the direction orthogonal to the length direction of the reinforcing long fiber.

The content of the reinforcing long fibers is preferably 40 parts by weight or more and more preferably 50 parts by weight or more, and is preferably 380 parts by weight or less, more preferably 300 parts by weight or less, and still more preferably 200 parts by weight or less, with respect to 100 parts by weight of the total of the polyol compound and the isocyanate compound. When the content of the reinforcing long fibers is the above lower limit or more, the flexural modulus, flexural strength and compressive strength of the resin molded body can be further enhanced. When the content of the reinforcing long fibers is the above upper limit or less, the portion between the reinforcing long fibers is easily impregnated with a composition (first composition) containing a polyol compound, an isocyanate compound, and calcium carbonate particles, and the effect of the present invention can be more effectively exhibited. The abrasion resistance, flexural modulus, and processability of the resin molded body can be enhanced.

The volume content ratio of the reinforcing long fibers in 100 vol% of the resin molded body is preferably 6 vol% or more and more preferably 8 vol% or more, and preferably 25 vol% or less and more preferably 20 vol% or less. When the volume content ratio of the reinforcing long fibers is the above lower limit or more and the above upper limit or less, the flexural modulus, the flexural strength and the compressive strength of the resin molded body can be further enhanced.

The volume content ratio of the reinforcing long fibers can be determined in accordance with a firing method described in JIS K7052.

The reinforcing long fibers are preferably uniformly dispersed in the resin molded body. In the curable resin composition according to the present invention, the portion between the reinforcing long fibers is easily impregnated with a composition (first composition) containing a polyol compound, an isocyanate compound, and calcium carbonate particles, and the first composition is easily retained between the reinforcing long fibers. As a result, the reinforcing long fibers are easily uniformly dispersed in the resin molded body.

[Calcium carbonate particles]

The calcium carbonate particles are a filler dispersed and filled in a resin portion of the resin molded body to reinforce strength.

From the viewpoint of improving the fluidity when the curable resin composition is molded, the calcium carbonate particles are preferably powdery calcium carbonate particles. Only one kind of the calcium carbonate particles may be used, or two or more kinds thereof may be used in combination.

The surfaces of the calcium carbonate particles may or may not be treated with a surface treatment agent. Examples of the surface treatment agent include barium sulfate.

From the viewpoint of suppressing the production cost, the surfaces of the calcium carbonate particles are preferably not treated with a surface treatment agent. The calcium carbonate particles are preferably surface-untreated products that are not treated with a surface treatment agent. In the present invention, since calcium carbonate particles having a specific average particle size and content are used, the effect of the present invention can be exhibited even when calcium carbonate particles that are not treated with a surface treatment agent are used.

From the viewpoint of exerting the effect of the present invention, the average particle size of the calcium carbonate particles is 8.5 μm or more. From the viewpoint of more effectively exhibiting the effect of the present invention, the average particle size of the calcium carbonate particles is preferably 10 μm or more.

The average particle size of the calcium carbonate particles is preferably 10 μm or more, more preferably 15 μm or more, and more preferably 20 μm or more, and is preferably 50 μm or less, more preferably 40 μm or less, and still more preferably 30 μm or less. When the average particle size of the calcium carbonate particles is the above lower limit or more and the above upper limit or less, the calcium carbonate particles are more easily dispersed more uniformly in the curable resin composition, and a resin molded body in which calcium carbonate particles are uniformly dispersed can be more favorably obtained. When the resin molded body is a foamed resin molded body, it is possible to effectively suppress the density of calcium carbonate particles in cell walls. Therefore, when the average particle size of the calcium carbonate particles is the above lower limit or more and the above upper limit or less, the effect of the present invention can be more effectively exhibited.

The average particle size of the calcium carbonate particles means a cumulative 50% diameter ($D_{50}$) in a number-based particle size distribution measured by a wet laser diffraction scattering method.

From the viewpoint of exerting the effect of the present invention, the content of the calcium carbonate particles is 40 parts by weight or more and 240 parts by weight or less with respect to 100 parts by weight of the total of the polyol compound and the isocyanate compound. When the content of the calcium carbonate particles is the above lower limit or more and the above upper limit or less, the production cost of the resin molded body can be suppressed. When the content of the calcium carbonate particles is the above lower limit or more, the flexural modulus, the flexural strength, and the compressive strength of the resin molded body can be increased.

The content of the calcium carbonate particles is preferably 50 parts by weight or more and more preferably 60 parts by weight or more, and is preferably 150 parts by weight or less and more preferably 100 parts by weight or less, with respect to 100 parts by weight of the total of the polyol compound and the isocyanate compound. When the content of the calcium carbonate particles is the above lower limit or more and the above upper limit or less, the effect of the present invention can be more effectively exhibited, and processability of the resin molded body can be enhanced. The production cost of the resin molded body can be suppressed. When the content of the calcium carbonate particles is the above lower limit or more, the flexural modulus, the flexural strength, and the compressive strength of the resin molded body can be increased.

From the viewpoint of exerting the effect of the present invention, the content of the calcium carbonate particles is 40 parts by weight or more and 240 parts by weight or less with respect to 100 parts by weight of the urethane resin. When the content of the calcium carbonate particles is the above lower limit or more and the above upper limit or less, the production cost of the resin molded body can be suppressed. When the content of the calcium carbonate particles is the above lower limit or more, the flexural modulus, the flexural strength, and the compressive strength of the resin molded body can be increased.

The content of the calcium carbonate particles is preferably 50 parts by weight or more and more preferably 60 parts by weight or more, and is preferably 150 parts by weight or less and more preferably 100 parts by weight or less, with respect to 100 parts by weight of the urethane resin. When the content of the calcium carbonate particles is the above lower limit or more and the above upper limit or less, the effect of the present invention can be more effectively exhibited, and processability of the resin molded body can be enhanced. The production cost of the resin molded body can be suppressed. When the content of the calcium carbonate particles is the above lower limit or more, the flexural modulus, the flexural strength, and the compressive strength of the resin molded body can be increased.

The volume content ratio of the calcium carbonate particles in 100 vol% of the curable resin composition is preferably 6 vol% or more and more preferably 8 vol% or more, and preferably 19 vol% or less and more preferably 13 vol% or less. When the volume content ratio of the calcium carbonate particles is the above lower limit or more and the above upper limit or less, the effect of the present invention can be more effectively exhibited. When the volume content ratio of the calcium carbonate particles is the above lower limit or more and the above upper limit or less, the flexural modulus of the resin molded body can be further enhanced.

The volume content ratio of the calcium carbonate particles in 100 vol% of the resin molded body is preferably 6 vol% or more and more preferably 8 vol% or more, and preferably 19 vol% or less and more preferably 13 vol% or less. When the volume content ratio of the calcium carbonate particles is the above lower limit or more and the above upper limit or less, the effect of the present invention can be more effectively exhibited. The flexural modulus of the resin molded body can be further enhanced.

The volume content ratio of the calcium carbonate particles can be determined in accordance with a firing method described in JIS K7052.

[Foaming agent]

The foaming agent is a substance that generates a gas by decomposition or a substance that itself becomes a gas.

From the viewpoint of obtaining a foamed resin molded body, the curable resin composition preferably contains a foaming agent. A foamed resin molded body can be obtained by foaming the curable resin composition with a foaming agent. The foamed resin molded body has an advantage of being lightweight as compared with a non-foamed resin molded body.

When calcium carbonate particles having a small average particle size are used, the calcium carbonate particles are likely to be concentrated on the surface and cell walls of the foamed resin molded body. Therefore, when the foamed molded body comes into contact with acid rain or the like, the cells easily communicate with each other due to dissolution of the calcium carbonate particles, and the acid rain or the like more easily permeates the inside of the resin molded body. On the other hand, in the curable resin composition according to the present invention, since calcium carbonate particles having a relatively large average particle size are used in a specific content, the calcium carbonate particles are less likely to have resistance in the curable resin composition, and the viscosity of the curable resin composition is less likely to increase. For this reason, the calcium carbonate particles easily enter between the reinforcing long fibers, and the calcium carbonate particles are easily uniformly dispersed in the curable resin composition. As a result, a foamed resin molded body in which calcium carbonate particles are uniformly dispersed can be obtained. Since calcium carbonate particles having a relatively large average particle size are used, it is difficult for the calcium carbonate particles to completely dissolve by an acid, and the cells hardly communicate with each other. Therefore, permeation of acid rain or the like into the resin molded body can be effectively suppressed, and the acid resistance of the foamed resin molded body can be enhanced. Therefore, when the curable resin composition contains a foaming agent and when the resin molded body is a foamed resin molded body, the effect of the present invention can be more effectively exhibited.

Examples of the foaming agent include water and an organohalogen compound. From the viewpoint of easy availability and excellent convenience, the foaming agent is preferably water. Water acts as a foaming agent by reacting with the isocyanate compound to generate $CO_2$. Only one kind of the foaming agent may be used, or two or more kinds thereof may be used in combination.

Examples of the organohalogen compound include an organochlorine compound, an organofluorine compound, an organobromine compound, and an organoiodine compound. The organohalogen compound may be an organohalogen compound in which all hydrogen atoms are substituted with halogen atoms, or may be an organohalogen compound in which some hydrogen atoms are substituted with halogen atoms. The organohalogen compound is preferably an organochlorine compound or an organofluorine compound from the viewpoint of improving the foamability at the time of forming the resin molded body and maintaining the thermal conductivity of the resin molded body lower for a longer period of time.

Examples of the organochlorine compound include a saturated organochlorine compound and an unsaturated organochlorine compound. Examples of the saturated organochlorine compound include dichloroethane, propyl chloride, isopropyl chloride, butyl chloride, isobutyl chloride, pentyl chloride, and isopentyl chloride. The organochlorine compound is preferably a saturated organochlorine compound, and more preferably a saturated organochlorine compound having 2 to 5 carbon atoms from the viewpoint of improving the foamability at the time of forming the resin molded body and maintaining the thermal conductivity of the resin molded body lower for a longer period of time.

Examples of the organofluorine compound include a saturated organofluorine compound and an unsaturated organofluorine compound.

Examples of the saturated organofluorine compound include hydrofluorocarbon. Examples of the hydrofluorocarbon include difluoromethane (HFC32), 1,1,1,2,2-pentafluoroethane (HFC125), 1,1,1-trifluoroethane (HFC143a), 1,1,2,2-tetrafluoroethane (HFC134), 1,1,1,2-tetrafluoroethane (HFC134a), 1,1-difluoroethane (HFC152a), 1,1,1,2,3,3,3-heptafluoropropane (HFC227ea), 1,1,1,3,3-pentafluoropropane (HFC245fa), 1,1,1,3,3-pentafluorobutane (HFC365mfc), and 1,1,1,2,2,3,4,5,5,5-decafluoropentane (HFC4310mee).

Examples of the unsaturated organofluorine compound include hydrofluoroolefin. Examples of the hydrofluoroolefin include 2,3,3,3-tetrafluoropropene (HFO-1234yf), 1,3,3,3-tetrafluoropropene (HFO-1234ze) (E and Z isomers), and 1,1,1,4,4,4-hexafluoro-2-butene (HFO1336mzz) (E and Z isomers).

Examples of the organofluorine compound include a compound having a chlorine atom, a fluorine atom, and a double bond. Examples of the compound having a chlorine atom, a fluorine atom, and a double bond include 1,2-dichloro-1,2-difluoroethene (E and Z isomers) and hydrochlorofluoroolefin. Examples of the hydrochlorofluoroolefin include 1-chloro-3,3,3-trifluoropropene (HCFO-1233zd) (E and Z isomers), 1-chloro-2,3,3-trifluoropropene (HCFO-1233yd) (E and Z isomers), 1-(4)chloro-1,3,3-trifluoropropene (HCFO-1233zb) (E and Z isomers), 2-chloro-1,3,3-trifluoropropene (HCFO-1233xe) (E and Z isomers), 2-chloro-2,2,3-trifluoropropene (HCFO-1233xc), 2-chloro-3,3,3-trifluoropropene (HCFO-1233xf), 3-chloro-1,2,3-trifluoropropene (HCFO-1233ye) (E and Z isomers), 3-chloro-1,1,2-trifluoropropene (HCFO-1233yc), 3,3-dichloro-3-fluoropropene, 1,2-dichloro-3,3,3-trifluoropropene (HCFO-1223xd) (E and Z isomers), 2-chloro-1,1,1,4,4,4-hexafluoro-2-butene (E and Z isomers), and 2-chloro-1,1,1,3,4,4,4-heptafluoro-2-butene (E and Z isomers).

The organohalogen compound is preferably hydrochlorofluoroolefin, hydrofluorocarbon, or hydrofluoroolefin from the viewpoint of improving the foamability at the time of forming the resin molded body and maintaining the thermal conductivity of the resin molded body lower for a longer period of time.

In consideration of foamability, the foaming agent can be used in an appropriate content. The content of the foaming agent is preferably 0.05 parts by weight or more and more preferably 0.1 parts by weight or more, and is preferably 1.0 part by weight or less and more preferably 0.8 parts by weight or less, with respect to 100 parts by weight of the polyol compound. When the content of the foaming agent is the above lower limit or more, foaming is promoted, a resin molded body is favorably formed, and dimensional defects of the resin molded body are less likely to occur. When the content of the foaming agent is the above upper limit or less, overflow of the curable resin composition from the mold due to excessive foaming can be suppressed.

The expansion ratio of the urethane resin in the resin molded body is preferably 1.1 times or more and more preferably 1.5 times or more, and is preferably 5 times or less and more preferably 3 times or less. When the expansion ratio is the above lower limit or more, a lightweight foamed resin molded body is easily obtained. When the expansion ratio is the above upper limit or less, a foamed resin molded body having good flexural modulus, flexural strength, and compressive strength is easily obtained.

The expansion ratio of the urethane resin is determined by the following formula from the volume V of the resin molded body and the weight W of the resin molded body, the volume content ratio $V_{filler}$ of the filler and the weight $W_{filler}$ of the filler determined by the firing method of JIS K7052, and the volume content ratio $V_{fiber}$ of the reinforcing long fibers and the weight $W_{fiber}$ of the reinforcing long fibers. Note that, when the resin molded body contains only the calcium carbonate particles as a filler, $V_{filler}$ and $W_{filler}$ represent the volume content ratio of the calcium carbonate particles and the weight of the calcium carbonate particles, respectively.

$$\text{Expansion ratio of urethane resin} = (1 - V_{filler} - V_{fiber})V/(W - W_{filler} - W_{fiber})$$

V: Volume ($cm^3$) of resin molded body
$V_{filler}$: Volume content ratio (vol%) of filler
$V_{fiber}$: Volume content ratio (vol%) of reinforcing long fibers
W: Weight (g) of resin molded body
$W_{filler}$: Weight (g) of filler
$W_{fiber}$: Weight (g) of reinforcing long fibers

[Catalyst]

A catalyst is a substance that promotes a chemical reaction.

The curable resin composition preferably contains a catalyst. Examples of the catalyst include a urethanization catalyst and a trimerization catalyst. Only one kind of the catalyst may be used, or two or more kinds thereof may be used in combination.

The curable resin composition preferably contains a urethanization catalyst. The urethanization catalyst promotes the reaction between the hydroxyl group of the polyol compound and the isocyanate group of the isocyanate compound to promote the formation of a urethane bond.

Examples of the urethanization catalyst include organotin compounds such as dibutyltin dimalate, dibutyltin dilaurate, and dibutylbis(oleoyloxy)stannane, tertiary amine compounds such as triethylamine, N-methylmorpholine bis(2-dimethylaminoethyl)ether, and N,N,N',N'',N''-pentamethyldiethylenetriamine, N,N,N'-trimethylaminoethyl-ethanolamine, bis(2-dimethylaminoethyl)ether, N-methyl,N'-dimethylaminoethylpiperazine, and an imidazole compound in which a secondary amine functional group in an imidazole ring is substituted with a cyanoethyl group. Only one kind of the urethanization catalyst may be used, or two or more kinds thereof may be used in combination.

The urethanization catalyst can be used in an appropriate content such that the polyol compound and the isocyanate compound react well. The content of the urethanization catalyst is preferably 0.01 parts by weight or more and more preferably 0.02 parts by weight or more, and is preferably 1.0 part by weight or less and more preferably 0.8 parts by weight or less, with respect to 100 parts by weight of the polyol compound. When the content of the urethanization catalyst is the above lower limit or more, the urethanization reaction effectively proceeds. When the content of the urethanization catalyst is the above upper limit or less, trimerization of isocyanate groups of the isocyanate compound is hardly inhibited.

The trimerization catalyst promotes the trimerization reaction of the isocyanate group of the isocyanate compound and promotes the formation of an isocyanurate ring. The trimerization catalyst suppresses expansion of the resin molded body during combustion.

Examples of the trimerization catalyst include an aromatic compound, an alkali metal salt of carboxylic acids, a quaternary ammonium salt of carboxylic acids, and a quaternary ammonium salt/ethylene glycol mixture. Examples of the aromatic compound include tris(dimethylaminomethyl)phenol, 2,4-bis(dimethylaminomethyl)phenol, and 2,4,6-tris(dialkylaminoalkyl)hexahydro-S-triazine. Examples of the alkali metal salt of carboxylic acids include potassium acetate and potassium 2-ethylhexanoate. Only one kind of the trimerization catalyst may be used, or two or more kinds thereof may be used in combination.

The trimerization catalyst can be used in an appropriate content so that the trimerization reaction is favorably promoted. The content of the trimerization catalyst is preferably 0.01 parts by weight or more and more preferably 0.05 parts by weight or more, and is preferably 1.0 part by weight or less and preferably 0.8 parts by weight or less, with respect to 100 parts by weight of the polyol compound. When the content of the trimerization catalyst is the above lower limit or more, expansion of the resin molded body is easily suppressed during formation of the resin molded body. When the content of the trimerization catalyst is the above upper limit or less, formation of a urethane bond is less likely to be hindered.

[Other components]

Note that the curable resin composition may contain other components such as a flame retardant, a foam stabilizer, and a filler other than calcium carbonate particles as long as the object of the present invention is not impaired. Only one kind of the other components may be used, or two or more kinds thereof may be used in combination.

The flame retardant is, for example, a substance capable of imparting flame retardancy to a combustible substance such as plastic, wood, or fiber when the flame retardant is added to the substance.

Examples of the flame retardant include a nitrogen-containing non-halogen flame retardant, red phosphorus, phosphate ester, a phosphate-containing flame retardant, a bromine-containing flame retardant, a boron-containing flame retardant, an antimony-containing flame retardant, and a metal hydroxide. Only one kind of the flame retardant may be used, or two or more kinds thereof may be used in combination.

The foam stabilizer is a substance capable of preventing coarsening and unevenness of bubbles and stably and satisfactorily forming bubbles.

Examples of the foam stabilizer include polyoxyalkylene foam stabilizers such as polyoxyalkylene alkyl ether and silicone foam stabilizers such as organopolysiloxane. Only one kind of the foam stabilizer may be used, or two or more kinds thereof may be used in combination.

The foam stabilizer can be used in an appropriate content so that bubbles are stably and favorably formed. From the viewpoint of stably and well forming bubbles, the content of the foam stabilizer is preferably 0.01 parts by weight or more, more preferably 0.1 parts by weight or more, and still more preferably 0.2 parts by weight or more, and is preferably 5 parts by weight or less, more preferably 3 parts by weight or less, and still more preferably 1 part by weight or less, with respect to 100 parts by weight of the polyol compound.

Examples of the filler other than the calcium carbonate particles include a carbonate compound, mineral, a sulfate compound, a silicate compound, clay, nitride, a carbon compound, a titanium compound, a metal borate compound, sulfide, carbide, ash, sand, and volcanic debris. Only one kind of the filler other than the calcium carbonate particles may be used, or two or more kinds thereof may be used in combination.

(Other details of curable resin composition)

The curable resin composition can be prepared by mixing the polyol compound, the isocyanate compound, the reinforcing long fibers, the calcium carbonate particles, and other components as necessary. The method for mixing the components is not particularly limited. A plurality of liquids containing one or more components may be prepared, and the plurality of liquids may be mixed to obtain a curable resin composition. The plurality of liquids may be mixed at the time of forming the resin molded body. The calcium carbonate particles and the isocyanate compound may be mixed with a liquid containing the polyol compound, and then the reinforcing long fibers may be impregnated with this liquid. The calcium carbonate particles may be mixed with a liquid containing the polyol compound, then the isocyanate compound may be mixed, and then the reinforcing long fibers may be impregnated with this liquid.

In the curable resin composition, the weight ratio of the content of the polyol compound to the content of the calcium carbonate particles (the content of the polyol compound/the content of the calcium carbonate particles) is defined as X. The viscosity at 12°C of a mixed liquid obtained by mixing X parts by weight of the polyol compound with 1 part by weight of the calcium carbonate particles is preferably 7000 cps or more and more preferably 13000 cps or more, and is preferably 60000 cps or less and more preferably 45000 cps or less. When the viscosity is the above lower limit or more and the above upper limit or less, the portion between the reinforcing long fibers is more easily impregnated with calcium carbonate particles in the curable resin composition, and the flexural modulus and abrasion resistance of the resin molded body can be improved.

The viscosity at 12°C of the mixed liquid can be measured using, for example, a Brookfield viscometer.

(Resin molded body)

A resin molded body can be obtained by molding and curing the curable resin composition according to the present invention. The resin molded body may be a foamed resin molded body. In the resin molded body, calcium carbonate particles are uniformly dispersed. The resin molded body is excellent in acid resistance. The resin molded body has a high flexural modulus.

A resin molded body can be obtained by, for example, heating the curable resin composition according to the present invention at 40°C to 80°C to be molded and cured.

Usually, when a bending load is applied to the resin molded body in a direction around the long fiber direction of the resin molded body, the resin molded body is generally broken by a compressive load applied to the loading side. This occurs because in the compressive strength on the loading side and the tensile strength on the side opposite to the loading side, the compressive strength is weaker. In the resin molded body, since the overall compressive strength can be increased, high flexural strength and compressive strength are exhibited when a heavy object or the like is loaded from the upper surface.

Crossties are embedded in, for example, gravel or the like. A crosstie is required to have a high flexural modulus from the viewpoint of reducing an amount of change in bending with respect to the load of a loaded object. A crosstie is also required to have high acid resistance since the crosstie is disposed outdoors and used. The resin molded body is suitably used, for example, as a crosstie because it has a good flexural modulus and acid resistance. The resin molded body is preferably a crosstie. The curable resin composition is suitably used for obtaining a crosstie.

When the resin molded body is used as a crosstie or the like, the size of the resin molded body is preferably 140 mm $\times$ 240 mm $\times$ 2600 mm (height (h) $\times$ width (w) $\times$ length (l)).

The height (h) is preferably 50 mm or more, more preferably 70 mm or more, and still more preferably 90 mm or more, and is preferably 300 mm or less, more preferably 280 mm or less, and still more preferably 260 mm or less.

The width (w) is preferably 50 mm or more, more preferably 100 mm or more, and still more preferably 150 mm or more, and is preferably 300 mm or less, more preferably 280 mm or less, and still more preferably 260 mm or less.

The length (l) is preferably 300 mm or more, more preferably 800 mm or more, and still more preferably 1200 mm or more, and is preferably 5000 mm or less, more preferably 3800 mm or less, and still more preferably 3500 mm or less.

When the size of the resin molded body is the above lower limit or more and the above upper limit or less, it has a good flexural modulus for a crosstie.

The shape of the crosstie is not particularly limited. For example, the crosstie may be a rectangular parallelepiped crosstie, or may be a crosstie including a rectangular parallelepiped main body and a protrusion protruding outward from the main body.

The crosstie (resin molded body) may have a length direction and a width direction. From the viewpoint of further improving the flexural modulus, the flexural strength, and the compressive strength of the crosstie, it is preferable that the reinforcing long fibers are arranged along the length direction of the crosstie (resin molded body).

(Method for producing resin molded body (crosstie))

A method for producing a resin molded body according to the present invention preferably includes a step of obtaining a first composition containing a polyol compound, an isocyanate compound, and calcium carbonate particles, an impregnation step of impregnating the first composition between reinforcing long fibers to obtain a curable resin composition, and a curing step of curing the curable resin composition in a mold. In the method for producing a resin molded body according to the present invention, an average particle size of the calcium carbonate particles is 8.5 $\mu$m or more. In the method for producing a resin molded body according to the present invention, the average particle size of the calcium carbonate particles is preferably 10 $\mu$m or more.

Fig. 2 is a diagram for explaining a method for producing a resin molded body according to an embodiment of the present invention. Fig. 2 is a diagram for explaining a method for producing a resin molded body used as a crosstie.

A production apparatus 100 includes a hopper 11, a belt feeder 12, an extruder 4 with a built-in screw, a pump 43, a first raw material tank 21, a pump 22, a second raw material tank 31, a pump 51, a mixing sprayer 5, a kneading plate 61, an impregnation plate 62, and a mold 63 having a heating unit.

<Step of obtaining first composition>

Calcium carbonate particles 1 are put into the hopper 11, and then the calcium carbonate particles 1 are conveyed by the belt feeder 12 and supplied to the extruder 4. A first raw material 2 is put into the first raw material tank 21 and mixed. The first raw material 2 is a liquid containing a polyol compound and a foaming agent. The first raw material 2 is supplied to the extruder 4 by the pump 22. In the extruder 4, the calcium carbonate particles 1 and the first raw material 2 are mixed by the rotation of the screw of the extruder 4, so that a mixed liquid of the calcium carbonate particles 1 and the first raw material 2 (hereinafter, referred to as "mixed liquid A") is obtained. Note that the first raw material may not contain a foaming agent. The first raw material may contain a catalyst, may contain a foam stabilizer, or may contain a catalyst and a foam stabilizer.

Since the average particle size of the calcium carbonate particles 1 is 8.5 $\mu$m or more, the stirring resistance can be reduced at the time of mixing the calcium carbonate particles 1 and the first raw material 2, and the viscosity of the mixed liquid A can be suppressed to be small. As a result, the calcium carbonate particles 1 are easily dispersed uniformly in the mixed liquid A. This effect is exhibited even when the average particle size of the calcium carbonate particles 1 is 0.1 $\mu$m or more, but is more effectively exhibited when the average particle size of the calcium carbonate particles 1 is 8.5 $\mu$m or more. From the viewpoint of more effectively exhibiting this effect, the average particle size of the calcium carbonate particles 1 is preferably 10 $\mu$m or more.

A second raw material 3 is put into the second raw material tank 31. The second raw material 3 is an isocyanate compound.

The mixed liquid A is supplied to the mixing sprayer 5 by the pump 43. The second raw material 3 is supplied to the mixing sprayer 5 by the pump 51. In the mixing sprayer 5, the mixed liquid A and the second raw material 3 are uniformly mixed, and a first composition 7 (a mixed liquid of the polyol compound, the isocyanate compound, the calcium carbonate particles 1, and the foaming agent) is obtained.

The content of the calcium carbonate particles 1 in the first composition 7 is preferably 40 parts by weight or more, more preferably 50 parts by weight or more, and still more preferably 60 parts by weight or more, and is preferably 240 parts by weight or less, more preferably 150 parts by weight or less, still more preferably 100 parts by weight or less, with respect to 100 parts by weight of the total of the polyol compound and the isocyanate compound in the first composition 7. That is, in the step of obtaining the first composition 7, it is preferable to mix the polyol compound, the isocyanate compound, and the calcium carbonate particles 1 such that the content of the calcium carbonate particles 1 satisfies the above preferable lower limit or upper limit with respect to 100 parts by weight of the total of the polyol compound and the isocyanate compound.

Note that since the calcium carbonate particles 1 are well dispersed in the mixed liquid A, the calcium carbonate particles 1 are also likely to be uniformly dispersed in the first composition 7.

<Impregnation step>

The first composition 7 is sprayed onto a reinforcing long fiber bundle 8, which is a fiber bundle of reinforcing long fibers, from a discharge port of the mixing sprayer 5. It is preferable that the first composition 7 is sprayed to the reinforcing long fiber bundle 8 while the reinforcing long fiber bundle 8 is allowed to advance in one direction. The reinforcing long fibers are glass long fibers, and the reinforcing long fiber bundle 8 is a glass long fiber bundle.

The first composition 7 and the reinforcing long fiber bundle 8 are kneaded between the kneading plate 61 and the impregnation plate 62, and the portion between the respective reinforcing long fibers constituting the reinforcing long fiber bundle 8 is uniformly impregnated with the first composition 7. In this way, a curable resin composition 81 is obtained.

Since the average particle size of the calcium carbonate particles 1 is 8.5 $\mu$m or more, the viscosity of the first composition 7 is relatively small. Therefore, when the reinforcing long fiber bundle 8 is impregnated with the first composition 7, the calcium carbonate particles 1 are easily dispersed between the reinforcing long fibers. Therefore, when the first composition 7 and the reinforcing long fiber bundle 8 are kneaded between the kneading plate 61 and the impregnation plate 62, the portion between the reinforcing long fibers is uniformly impregnated with the first composition 7. This effect is exhibited even when the average particle size of the calcium carbonate particles 1 is 0.1 $\mu$m or more, but is more effectively exhibited when the average particle size of the calcium carbonate particles 1 is 8.5 $\mu$m or more. From the viewpoint of more effectively exhibiting this effect, the average particle size of the calcium carbonate particles 1 is preferably 10 $\mu$m or more.

It is preferable that in the impregnation step, the first composition is impregnated between the reinforcing long fibers so that the content of the reinforcing long fibers is 20 parts by weight or more and 150 parts by weight or less with respect to 100 parts by weight of the first composition.

<Curing step>

A foamed resin molded body can be produced by foaming and curing the curable resin composition 81 in the mold 63. More specifically, the curable resin composition 81 is transferred to the mold 63, and the curable resin composition 81 is foamed and cured in the mold 63, so that a foamed resin molded body corresponding to the shape of the mold 63 can be produced. Note that the foamed resin molded body can be continuously produced by sequentially transferring the curable resin composition 81 to the mold 63.

Note that when the curable resin composition 81 does not contain a foaming agent, the curable resin composition 81 is cured in the mold 63, so that a resin molded body corresponding to the shape of the mold 63 can be produced.

As described above, since specific calcium carbonate particles are used in the present invention, the calcium carbonate particles 1 can be well dispersed in the curable resin composition 81, and the calcium carbonate particles 1 can be well dispersed in the obtained resin molded body. In the present invention, the calcium carbonate particles 1 can be satisfactorily impregnated between the reinforcing long fibers even when the amount of the reinforcing long fibers used is increased, so that the calcium carbonate particles 1 can be satisfactorily dispersed in the resulting resin molded body. As a result, the acid resistance and flexural modulus of the resulting resin molded body can be increased.

In the method for producing a resin molded body according to the present invention, a resin molded body having small variations in flexural modulus, flexural strength, and compressive strength can be obtained.

[Second invention]

The resin molded body may be processed with a metal drill or the like. In a conventional resin molded body, the resin molded body may not be processed well with a metal drill. In the conventional resin molded body, the metal drill used for processing the resin molded body may be worn.

For example, in JP 2001-246632 A, the solid filler is used to increase the compressive strength and the flexural strength of a foamed urethane resin molded article. In Examples of JP 2001-246632 A, silica sand #7 is used as the solid filler. In the case of using such silica sand #7, even when the compressive strength and the flexural strength of the resin molded body can be increased, a metal drill is easily worn when the resin molded body is processed with the metal drill. As a result, drilling may not be performed continuously and stably.

In the present specification, the following second invention (resin composition and resin molded body) is also disclosed.

An object of the second invention is to provide a curable resin composition capable of obtaining a resin molded body excellent in processability. Another object of the second invention is to provide a resin molded body excellent in processability and a method for producing the same.

Curable resin composition of second invention:

A curable resin composition containing: a polyol compound; an isocyanate compound; reinforcing long fibers; and calcium carbonate particles, an average particle size of the calcium carbonate particles being 0.1 $\mu$m or more, a content of the calcium carbonate particles being 40 parts by weight or more and 240 parts by weight or less with respect to 100 parts by weight of a total of the polyol compound and the isocyanate compound, and a volume content ratio of the calcium carbonate particles in 100 vol% of the curable resin composition being 6 vol% or more and 19 vol% or less.

That is, the curable resin composition according to the second invention contains a polyol compound, an isocyanate compound, reinforcing long fibers, and calcium carbonate particles, in which an average particle size of the calcium carbonate particles is 0.1 $\mu$m or more. In the curable resin composition according to the second invention, the content of the calcium carbonate particles is 40 parts by weight or more and 240 parts by weight or less with respect to 100 parts by weight of the total of the polyol compound and the isocyanate compound. The volume content ratio of the calcium carbonate particles in 100 vol% of the curable resin composition according to the second invention is 6 vol% or more and 19 vol% or less.

The resin molded body may be processed with a metal drill or the like. In a conventional resin molded body, the resin molded body may not be processed well with a metal drill. As a result, drilling may not be performed continuously and stably. In the conventional resin molded body, the metal drill used for processing the resin molded body may be worn. It is conceivable to use a filler in order to increase the compressive strength and the flexural strength of the resin molded body. However, a resin molded body containing a filler may be particularly inferior in processability with a metal drill or the like. In particular, depending on the type of the filler and the like, the resin molded body containing the filler in a content of 6 vol% or more in 100 vol% of the resin molded body may be considerably inferior in processability.

Since the curable resin composition according to the second invention has the above configuration, a resin molded body excellent in processability can be obtained.

Since specific calcium carbonate particles are used in the curable resin composition according to the second invention, the flexural strength and the compressive strength of the resulting resin molded body can be increased. Among fillers, calcium carbonate is relatively inexpensive. In the curable resin composition according to the second invention, processability can be enhanced and the flexural strength and the compressive strength can be enhanced while suppressing cost of a resulting resin molded body.

Since the curable resin composition according to the second invention has the above configuration, the filler is particularly specific calcium carbonate particles, and thus even when the content of the filler in 100 vol% of the curable resin composition is 6 vol% or more, the curable resin composition can be favorably processed with a metal drill or the like. In the curable resin composition according to the second invention, even when the content of the filler in 100 vol% of the curable resin composition is 6 vol% or more, a resulting resin molded body can be favorably processed with a metal drill or the like continuously and stably. In the curable composition according to the second invention, even when the volume content ratio of the calcium carbonate particles in 100 wt% of the curable composition is 19 vol% or less, a resulting resin molded body can be favorably processed with a metal drill or the like continuously and stably.

In the curable resin composition according to the second invention, the average particle size of the calcium carbonate particles may be 0.1 $\mu$m or more. In the curable resin composition according to the second invention, the average particle size of the calcium carbonate particles may be 0.1 $\mu$m or more and less than 8.5 $\mu$m. In the curable resin composition according to the second invention, when the average particle size of the calcium carbonate particles is 0.1 $\mu$m or more and less than 8.5 $\mu$m, it is difficult to obtain a resin molded body excellent in acid resistance, but it is possible to obtain a resin molded body excellent in processability. In the second invention, since the effect of excellent processability is exhibited, the effect of excellent acid resistance is not necessarily exhibited. From the viewpoint of obtaining a resin molded body excellent not only in processability but also in acid resistance, in the curable resin composition according to the second invention, the average particle size of the calcium carbonate particles is preferably 8.5 $\mu$m or more, and more preferably 10 $\mu$m or more.

Resin molded body of second invention:

A resin molded body containing: a urethane resin; reinforcing long fibers; and calcium carbonate particles, an average particle size of the calcium carbonate particles being 0.1 $\mu$m or more, a content of the calcium carbonate particles being 40 parts by weight or more and 240 parts by weight or less with respect to 100 parts by weight of the urethane resin, and a volume content ratio of the calcium carbonate particles in 100 vol% of the resin molded body being 6 vol% or more and 19 vol% or less.

The resin molded body according to the second invention contains a urethane resin, reinforcing long fibers, and calcium carbonate particles, in which an average particle size of the calcium carbonate particles is 0.1 $\mu$m or more. In the resin molded body according to the second invention, a content of the calcium carbonate particles is 40 parts by weight or more and 240 parts by weight or less with respect to 100 parts by weight of the urethane resin. The volume content ratio of the calcium carbonate particles in 100 vol% of the resin molded body according to the second invention is 6 vol% or more and 19 vol% or less.

Since the resin molded body according to the second invention has the above configuration, processability is excellent.

Since specific calcium carbonate particles are used in the resin molded body according to the second invention, the flexural strength and the compressive strength of the resin molded body can be increased. Among fillers, calcium carbonate is relatively inexpensive. In the resin molded body according to the second invention, processability can be enhanced and the flexural strength and the compressive strength can be enhanced while suppressing cost of a resin molded body.

Since the resin molded body according to the second invention has the above configuration, the filler is particularly specific calcium carbonate particles, and thus even when the content of the filler in 100 vol% of the resin molded body is 6 vol% or more, the resin molded body can be favorably processed with a metal drill or the like. In the resin molded body according to the second invention, even when the content of the filler is 6 vol% or more in 100 vol% of the resin molded body, the resin molded body can be favorably processed with a metal drill or the like continuously and stably. In the resin molded body according to the second invention, even when the volume content ratio of the calcium carbonate particles in 100 wt% of the resin molded body is 19 vol% or less, the resin molded body can be favorably processed with a metal drill or the like continuously and stably.

In the resin molded body according to the second invention, the average particle size of the calcium carbonate particles may be 0.1 $\mu$m or more. In the resin molded body according to the second invention, the average particle size of the calcium carbonate particles may be 0.1 $\mu$m or more and less than 8.5 $\mu$m. In the resin molded body according to the second invention, when the average particle size of the calcium carbonate particles is 0.1 $\mu$m or more and less than 8.5 $\mu$m, it is difficult to obtain a resin molded body excellent in acid resistance, but the processability of the resin molded body is excellent. In the second invention, since the effect of excellent processability is exhibited, the effect of excellent acid resistance is not necessarily exhibited. From the viewpoint of obtaining a resin molded body excellent not only in processability but also in acid resistance, in the resin molded body according to the second invention, the average particle size of the calcium carbonate particles is preferably 8.5 $\mu$m or more, and more preferably 10 $\mu$m or more.

Other details of second invention:

From the viewpoint of exerting the effect of the second invention, particularly, the effect excellent in processability, in the second invention, the average particle size of the calcium carbonate particles is 0.1 $\mu$m or more.

In the second invention, the average particle size of the calcium carbonate particles is preferably 5 $\mu$m or more, more preferably 8.5 $\mu$m or more, still more preferably 10 $\mu$m or more, and particularly preferably 15 $\mu$m or more, and is preferably 50 $\mu$m or less, more preferably 40 $\mu$m or less, and still more preferably 30 $\mu$m or less. When the average particle size of the calcium carbonate particles is the above lower limit or more and the above upper limit or less, the calcium carbonate particles are more easily dispersed more uniformly in the curable resin composition, and a resin molded body in which calcium carbonate particles are uniformly dispersed can be more favorably obtained. When the resin molded body is a foamed resin molded body, it is possible to effectively suppress the density of calcium carbonate particles in cell walls. Therefore, when the average particle size of the calcium carbonate particles is the above lower limit or more and the above upper limit or less, the effect of the second invention can be more effectively exhibited. In the second invention, the average particle size of the calcium carbonate particles may be less than 10 $\mu$m or less than 8.5 $\mu$m.

The average particle size of the calcium carbonate particles means a cumulative 50% diameter (D50) in a number-based particle size distribution measured by a wet laser diffraction scattering method.

The volume content ratio of the calcium carbonate particles in 100 vol% of the curable resin composition according to the second invention is 6 vol% or more and 19 vol% or less. In the curable resin composition, even when the content of the filler in 100 vol% of the curable resin composition is 6 vol% or more, a resin molded body excellent in processability can be obtained. Since the volume content ratio of the calcium carbonate particles in 100 vol% of the curable resin composition is the above lower limit or more and the above upper limit or less, the processability can be enhanced and the flexural strength and the compressive strength can be enhanced while suppressing the cost of the resin molded body.

The volume content ratio of the calcium carbonate particles in 100 vol% of the resin molded body according to the second invention is 6 vol% or more and 19 vol% or less. In the resin molded body, even when the content of the filler in 100 vol% of the resin molded body is 6 vol% or more, processability is excellent. Since the volume content ratio of the calcium carbonate particles in 100 vol% of the resin molded body is the above lower limit or more and the above upper limit or less, the processability can be enhanced and the flexural strength and the compressive strength can be enhanced while suppressing the cost of the resin molded body.

The volume content ratio of the calcium carbonate particles in 100 vol% of the curable resin composition according to the second invention and 100 vol% of the resin molded body according to the second invention is preferably 7 vol% or more and more preferably 8 vol% or more, and is preferably 17 vol% or less, more preferably 15 vol% or less, still more preferably 13 vol% or less, and particularly preferably 12 vol% or less. Even when the volume content ratio of the calcium carbonate particles is the above lower limit or more, the processability of the resin molded body can be sufficiently enhanced. When the content of the calcium carbonate particles is the above upper limit or less, the processability of the resin molded body can be further enhanced. When the volume content ratio of the calcium carbonate particles is the above lower limit or more and the above upper limit or less, the flexural strength and the compressive strength of the resin molded body can be further enhanced. It is preferable to use calcium carbonate particles so that the above-described series of steps (the step of obtaining a first composition, the impregnation step, and the curing step) is obtained and the volume content ratio of calcium carbonate particles in 100 vol% of the resin molded body satisfies the above preferable lower limit or upper limit.

The volume content ratio of the calcium carbonate particles can be determined in accordance with a firing method described in JIS K7052.

As for the constitution other than the average particle size and the volume content ratio of the calcium carbonate particles of the second invention, the above-mentioned preferable constitution of the first invention is applied.

Hereinafter, the present invention will be specifically described with reference to Examples and Comparative Examples. The present invention is not limited only to the following Examples.

The following materials were prepared.

(Polyol compound)

Polyether polyol ("M9158" manufactured by Sumika Covestro Urethane Co., Ltd., viscosity at 12°C: 500 cps)

(Isocyanate compound)

Diphenylmethane diisocyanate ("Polymeric MDI" manufactured by Sumika Covestro Urethane Co., Ltd., viscosity at 12°C: 200 cps)

The viscosities at 12°C of the polyol compound and the isocyanate compound were measured with a Brookfield viscometer ("Digital Rotary Viscometer" manufactured by Viscotech Co., Ltd.).

(Filler)

Calcium carbonate particles A ("Whiton H" manufactured by Shiraishi Calcium Kaisha, Ltd., specific gravity: 2.7, average particle size: 22 μm, surface-untreated product)

Calcium carbonate particles B ("Minex SP" manufactured by Shiraishi Calcium Kaisha, Ltd., specific gravity: 2.7, average particle size: 15.5 μm, surface-untreated product)

Calcium carbonate particles C ("Minex NO.4-F" manufactured by Shiraishi Calcium Kaisha, Ltd., specific gravity: 2.7, average particle size: 8.5 μm, surface-untreated product)

Calcium carbonate particles X ("Whiton P-30" manufactured by Shiraishi Calcium Kaisha, Ltd., specific gravity: 2.7, average particle size: 5.5 μm, surface-untreated product)

Calcium carbonate particles Y ("Whiton P-10" manufactured by Shiraishi Calcium Kaisha, Ltd., specific gravity: 2.7, average particle size: 3.0 μm, surface-untreated product)

Figs. 3 and 4 show electron micrographs of calcium carbonate particles. Fig. 3 is an electron micrograph of calcium carbonate particles A (average particle size: 22 $\mu$m). Fig. 4 is an electron micrograph of calcium carbonate particles X (average particle size: 5.5 $\mu$m).

(Reinforcing long fibers)

Glass long fibers (obtained by arranging and roving a large number of monofilaments having a fiber diameter of 6 to 20 $\mu$m)

(Foaming agent)

Water

(Catalyst)

Tertiary amine catalyst A ("DABCO 33LV" manufactured by Evonik Japan K.K.)
Tertiary amine catalyst B ("U-CAT SA1" manufactured by San-Apro Ltd.)

(Foam stabilizer)

Silicone oil ("SZ-1729" manufactured by Dow Toray Silicone Co., Ltd.)

(Example 1)

A foamed resin molded body was produced by the method shown in Fig. 2.

<Preparation of curable resin composition>

A polyol compound, a foaming agent, a catalyst, and a foam stabilizer were mixed to obtain a first raw material in Fig. 2. The first raw material and a filler (calcium carbonate particles A) were mixed to obtain a mixed liquid A. An isocyanate compound as a second raw material was added to and mixed with the obtained mixed liquid A to obtain a first composition. The obtained first composition was impregnated between glass long fibers to prepare a curable resin composition. Each component was used in the blending amount (parts by weight) shown in Table 1 below.

(Production of resin molded body)

The obtained curable resin composition was injected into a rectangular mold (400 mm in length $\times$ 100 mm in width $\times$ 65 mm in height), and then heated in an oven at 40°C for 50 minutes to foam-mold and cure the composition, thereby obtaining a resin molded body (foamed resin molded body) from the mold.

(Examples 2 and 3 and Comparative Examples 1 and 2)

Curable resin compositions and resin molded bodies (foamed resin molded bodies) were obtained in the same manner as in Example 1 except that the types of compounding components used were changed as shown in the following Table 1.

(Evaluation)

(1) Volume content ratios of calcium carbonate particles and glass long fibers

The obtained resin molded body was cut into a size of 10 mm in length $\times$ 10 mm in width $\times$ 10 mm in thickness. Using the cut resin molded body, the volume content ratio of calcium carbonate particles in 100 vol% of the resin molded body and the volume content ratio of glass long fibers in 100 vol% of the resin molded body were determined in accordance with the firing method described in JIS K7052.

(2) Expansion ratio of urethane resin

The obtained resin molded body was cut into a size of 10 mm in length × 10 mm in width × 10 mm in thickness to obtain an evaluation sample. The volume V and the weight W of the resin molded body were determined by the following formula. Using the volume content ratio $V_{filler}$ of calcium carbonate particles and the weight $W_{filler}$ of calcium carbonate particles, and the volume content ratio $V_{fiber}$ of glass long fibers and the weight $W_{fiber}$ of glass long fibers, which are determined by the firing method of JIS K7052, the expansion ratio of the urethane resin was determined by the following formula.

Volume V= vertical length of evaluation sample × horizontal length of evaluation sample × thickness of evaluation sample

Weight W= weight of evaluation sample Expansion ratio of urethane resin = $(1 - V_{filler} - V_{fiber})V/(W - W_{filler} - W_{fiber})$

V: Volume ($cm^3$) of resin molded body
$V_{filler}$: Volume content ratio (vol%) of calcium carbonate particles
$V_{fiber}$: Volume content ratio (vol%) of glass long fibers
W: Weight (g) of resin molded body
$W_{filler}$: Weight (g) of calcium carbonate particles
$W_{fiber}$: Weight (g) of glass long fibers

(3) Acid resistance

The obtained resin molded body was cut into a size of 20 mm in length × 20 mm in width × 40 mm in thickness to obtain an evaluation sample.

The following components were mixed to prepare an acidic solution A having a pH of 3.5 and an acidic solution B having a pH of 5.5. Each of the acidic solutions A and B is an artificial acid rain solution.

<Acidic solution A (pH 3.5)>

5 wt% aqueous sodium chloride solution: 10 L
Nitric acid: 0.012 L
Sulfuric acid: 0.0173 L

<Acidic solution B (pH 5.5)>

5 wt% aqueous sodium chloride solution: 10 L
Nitric acid: 0.00012 L
Sulfuric acid: 0.000173 L

The entire evaluation sample was left to stand in a state of being immersed in the acidic solution A for two weeks. Similarly, the entire evaluation sample was left to stand in a state of being immersed in the acidic solution B for two weeks. The surface of the evaluation sample before immersion, the surface of the evaluation sample after immersion, and the cross section of the evaluation sample after immersion (cross section along the direction orthogonal to the thickness direction) were observed with a scanning electron microscope (SEM).

From the micrograph of the cross section of the evaluation sample after immersion, a distance D (average distance) to which the calcium carbonate particles dissolve was determined. Note that the distance D to which the calcium carbonate particles dissolve corresponds to a distance to which the acidic solution has penetrated.

The evaluation sample after immersion was observed using a desktop scanning electron microscope (JCM-7000), and elemental analysis of the visual field was performed.

Note that the test using the acidic solution A was performed in Examples 1 to 3 and Comparative Examples 1 and 2. The test using the acidic test B was performed in Example 1 and Comparative Example 1.

In the test using the acidic solution A, the compressive strength of the evaluation sample before immersion and after immersion was measured by the following method.

Method for measuring compressive strength:

The obtained resin molded body was cut into a size of length × width × thickness = 40 mm × 20 mm × 20 mm to obtain an evaluation sample. The length direction of the evaluation sample was matched with the fiber direction. The evaluation sample was pressurized at a test speed of 0.5 mm/min in the length direction of the evaluation sample before immersion and after immersion, and a value obtained by dividing the maximum load at that time by the cross-sectional area was taken as the compressive strength.

Details and results are shown in Tables 1 to 4 below and Figs. 5 to 13.

Fig. 5 shows results when a test was performed using an acidic solution A in Example 1. Fig. 5(a) is a micrograph of the surface of an evaluation sample before immersion in the acidic solution A, Fig. 5(b) is a micrograph of the surface of the evaluation sample after immersion in the acidic solution A, Fig. 5(c) is a micrograph of the cross section of the evaluation sample after immersion in the acidic solution A, and Fig. 5(d) is an elemental analysis result of the evaluation sample after immersion in the acidic solution A.

Fig. 6 shows results when a test was performed using an acidic solution A in Example 2. Fig. 6(a) is a micrograph of the surface of an evaluation sample before immersion in the acidic solution A, Fig. 6(b) is a micrograph of the surface of the evaluation sample after immersion in the acidic solution A, Fig. 6(c) is a micrograph of the cross section of the evaluation sample after immersion in the acidic solution A, and Fig. 6(d) is an elemental analysis result of the evaluation sample after immersion in the acidic solution A.

Fig. 7 shows results when a test was performed using an acidic solution A in Example 3. Fig. 7(a) is a micrograph of the surface of an evaluation sample before immersion in the acidic solution A, Fig. 7(b) is a micrograph of the surface of the evaluation sample after immersion in the acidic solution A, Fig. 7(c) is a micrograph of the cross section of the evaluation sample after immersion in the acidic solution A, and Fig. 7(d) is an elemental analysis result of the evaluation sample after immersion in the acidic solution A.

Fig. 8 shows results when a test was performed using an acidic solution A in Comparative Example 1. Fig. 8(a) is a micrograph of the surface of an evaluation sample before immersion in the acidic solution A, Fig. 8(b) is a micrograph of the surface of the evaluation sample after immersion in the acidic solution A, Fig. 8(c) is a micrograph of the cross section of the evaluation sample after immersion in the acidic solution A, and Fig. 8(d) is an elemental analysis result of the evaluation sample after immersion in the acidic solution A.

Fig. 9 shows results when a test was performed using an acidic solution A in Comparative Example 2. Fig. 9(a) is a micrograph of the surface of an evaluation sample before immersion in the acidic solution A, Fig. 9(b) is a micrograph of the surface of the evaluation sample after immersion in the acidic solution A, Fig. 9(c) is a micrograph of the cross section of the evaluation sample after immersion in the acidic solution A, and Fig. 9(d) is an elemental analysis result of the evaluation sample after immersion in the acidic solution A.

Fig. 10 shows results when a test was performed using an acidic solution B in Example 1. Fig. 7(a) is a micrograph of the surface of an evaluation sample before immersion in the acidic solution B, Fig. 10(b) is a micrograph of the surface of the evaluation sample after immersion in the acidic solution B, Fig. 10(c) is a micrograph of the cross section of the evaluation sample after immersion in the acidic solution B, and Fig. 10(d) is an elemental analysis result of the evaluation sample after immersion in the acidic solution B.

Fig. 11 shows results when a test was performed using an acidic solution B in Comparative Example 1. Fig. 11(a) is a micrograph of the surface of an evaluation sample before immersion in the acidic solution B, Fig. 11(b) is a micrograph of the surface of the evaluation sample after immersion in the acidic solution B, Fig. 11(c) is a micrograph of the cross section of the evaluation sample after immersion in the acidic solution B, and Fig. 11(d) is an elemental analysis result of the evaluation sample after immersion in the acidic solution B.

Fig. 12 shows results of a compressive strength obtained by performing a compression test on evaluation samples before and after immersion in an acidic solution A in Examples 1 to 3 and Comparative Examples 1 and 2. In Fig. 12, "A" is Example 1, "B" is Example 2, "C" is Example 3, "X" is Comparative Example 1, and "Y" is Comparative Example 2.

Fig. 13 shows results of a rate of decrease in compressive strength obtained by performing a compression test on evaluation samples before and after immersion in an acidic solution A in Examples 1 to 3 and Comparative Examples 1 and 2.

[Table 1]

| | | | | Example 1 | Example 2 | Example 3 |
|---|---|---|---|---|---|---|
| Curable resin composition | Polyol compound | | parts by weight | 100 | 100 | 100 |
| | Isocyanate compound | | parts by weight | 123 | 123 | 123 |
| | Filler | Calcium carbonate particles A (average particle size: 22 μm) | parts by weight | 170 | | |
| | | Calcium carbonate particles B (average particle size: 15.5 μm) | parts by weight | - | 170 | - |
| | | Calcium carbonate particles C (average particle size: 8.5 μm) | parts by weight | - | - | 170 |
| | | Calcium carbonate particles X (average particle size: 5.5 μm) | parts by weight | - | - | - |
| | | Calcium carbonate particles Y (average particle size: 3.0 μm) | parts by weight | - | - | - |
| | Reinforcing long fibers | Glass long fibers (fiber length: 50 mm or more) | parts by weight | 142 | 142 | 142 |
| | Foaming agent | Water | parts by weight | 0.3 | 0.3 | 0.3 |
| | Catalyst | Tertiary amine catalyst A | parts by weight | 0.25 | 0.25 | 0.25 |
| | | Tertiary amine catalyst B | parts by weight | 0.4 | 0.4 | 0.4 |
| | Foam stabilizer | Silicone oil | parts by weight | 0.9 | 0.9 | 0.9 |
| | Content of calcium carbonate particles with respect to 100 parts by weight of total of polyol compound and isocyanate compound | | parts by weight | 76 | 76 | 76 |
| | Content of reinforcing long fibers with respect to 100 parts by weight of total of polyol compound and isocyanate compound | | parts by weight | 64 | 64 | 64 |

[Table 2]

| | | | Example 1 | Example 2 | Example 3 |
|---|---|---|---|---|---|
| | Volume content ratio of calcium carbonate particles | vol% | 9.5 | 9.5 | 9.5 |

(continued)

| | | | | Example 1 | Example 2 | Example 3 |
|---|---|---|---|---|---|---|
| Resin molded body | | Volume content ratio of glass long fibers | vol% | 8.6 | 8.6 | 8.6 |
| | | Expansion ratio of urethane resin | times | 1.8 | 1.8 | 1.8 |
| | Acidic solution A (pH 3.5) | Distance D to which calcium carbonate particles dissolve (distance to acidic solution has penetrated) | μm | 50 | 50 | 90 |
| | Acidic solution B (pH 5.5) | Distance D to which calcium carbonate particles dissolve (distance to acidic solution has penetrated) | μm | 20 | - | - |

[Table 3]

| | | | | Comparative Example 1 | Comparative Example 2 |
|---|---|---|---|---|---|
| Curable resin composition | | Polyol compound | parts by weight | 100 | 100 |
| | | Isocyanate compound | parts by weight | 123 | 123 |
| | Filler | Calcium carbonate particles A (average particle size: 22 μm) | parts by weight | - | - |
| | | Calcium carbonate particles B (average particle size: 15.5 μm) | parts by weight | - | - |
| | | Calcium carbonate particles C (average particle size: 8.5 μm) | parts by weight | - | - |
| | | Calcium carbonate particles X (average particle size: 5.5 μm) | parts by weight | 170 | - |
| | | Calcium carbonate particles Y (average particle size: 3.0 μm) | parts by weight | - | 170 |
| | Reinforcing long fibers | Glass long fibers (fiber length: 50 mm or more) | parts by weight | 142 | 142 |
| | Foaming agent | Water | parts by weight | 0.3 | 0.3 |
| | Catalyst | Tertiary amine catalyst A | parts by weight | 0.25 | 0.25 |
| | | Tertiary amine catalyst B | parts by weight | 0.4 | 0.4 |

(continued)

|  |  |  | | Comparative Example 1 | Comparative Example 2 |
|---|---|---|---|---|---|
|  | Foam stabilizer | Silicone oil | parts by weight | 0.9 | 0.9 |
|  | Content of calcium carbonate particles with respect to 100 parts by weight of total of polyol compound and isocyanate compound | | parts by weight | 76 | 76 |
|  | Content of reinforcing long fibers with respect to 100 parts by weight of total of polyol compound and isocyanate compound | | parts by weight | 64 | 64 |

[Table 4]

|  |  |  | | Comparative Example 1 | Comparative Example 2 |
|---|---|---|---|---|---|
| Resin molded body | Volume content ratio of calcium carbonate particles | | vol% | 9.5 | 9.5 |
|  | Volume content ratio of glass long fibers | | vol% | 8.6 | 8.6 |
|  | Expansion ratio of urethane resin | | times | 1.8 | 1.8 |
|  | Acidic solution A (pH 3.5) | Distance D to which calcium carbonate particles dissolve (distance to acidic solution has pene-trated) | $\mu$m | 300 | 350 |
|  | Acidic solution B (pH 5.5) | Distance D to which calcium carbonate particles dissolve (distance to acidic solution has pene-trated) | $\mu$m | 50 | - |

Hereinafter, the second invention (and the first invention) will be described in more detail with reference to Examples and Comparative Examples. The second invention (and the first invention) is not limited only to the following Examples. The following Examples correspond to Examples in the first invention, and the following Comparative Examples correspond to Comparative Examples in the first invention.

The following materials were prepared.

(Polyol compound)

Polyether polyol A ("DESMOPHEN V 883" manufactured by Sumika Covestro Urethane Co., Ltd., viscosity at 12°C: 500 cps)
Polyether polyol B ("J610" manufactured by Sumika Covestro Urethane Co., Ltd., viscosity at 25°C: 4500 cps)

(Isocyanate compound)

Diphenylmethane diisocyanate ("Polymeric MDI" manufactured by Sumika Covestro Urethane Co., Ltd., viscosity at 12°C: 200 cps)

The viscosities at 12°C of the polyol compound and the isocyanate compound were measured with a Brookfield viscometer ("Digital Rotary Viscometer" manufactured by Viscotech Co., Ltd.).

(Filler)

Calcium carbonate particles ("Durcal 15" manufactured by Omya International AG, specific gravity: 2.7, average particle size: 22 $\mu$m, surface-untreated product)

Silica sand ("silica sand #7" manufactured by YAMAKAWA SANGYO CO., LTD., specific gravity: 2.7, average particle size: 190 μm)

(Reinforcing long fibers)

Glass long fibers (obtained by arranging and roving a large number of monofilaments having a fiber diameter of 6 to 20 μm)

(Foaming agent)

Water

(Catalyst)

Tertiary amine catalyst A ("DABCO 33LV" manufactured by Evonik Japan K.K.)
Tertiary amine catalyst B ("U-CAT SA1" manufactured by San-Apro Ltd.)
Tin catalyst ("SCAT-31A" manufactured by Nitto Kasei Co., Ltd.)

(Foam stabilizer)

Silicone oil A ("TEGOSTAB B 8404" manufactured by Evonik Japan K.K.
Silicone oil B ("SZ-1729" manufactured by Dow Toray Silicone Co., Ltd.)

(Example 4)

A foamed resin molded body was produced by the method shown in Fig. 2.

<Preparation of curable resin composition>

A polyol compound, a foaming agent, a catalyst, and a foam stabilizer were mixed to obtain a first raw material in Fig. 2. The first raw material and a filler (calcium carbonate particles) were mixed to obtain a mixed liquid A. An isocyanate compound as a second raw material was added to and mixed with the obtained mixed liquid A to obtain a first composition. The obtained first composition was impregnated between glass long fibers to prepare a curable resin composition. Each component was used in the blending amount (parts by weight) shown below.
Composition of curable resin composition:

Polyether polyol A 100 parts by weight
Diphenylmethane diisocyanate 123 parts by weight
Calcium carbonate particles 170 parts by weight
Glass long fibers 133 parts by weight
Water 0.5 parts by weight
Tertiary amine catalyst A 0.4 parts by weight
Tertiary amine catalyst B 0.25 parts by weight
Silicone oil A 0.9 parts by weight

<Production of resin molded body>

The obtained curable resin composition was injected into a rectangular mold (400 mm in length × 100 mm in width × 65 mm in height), and then heated in an oven at 40°C for 50 minutes to foam-mold and cure the composition, thereby obtaining a resin molded body (foamed resin molded body, thickness: 140 mm) from the mold. The density of the obtained resin molded body was 0.85 g/cm$^3$.

(Comparative Example 3)

<Preparation of curable resin composition>

A curable resin composition was prepared by changing the types of compounding components used as described below.

Composition of curable resin composition:

Polyether polyol B 100 parts by weight
Diphenylmethane diisocyanate 149.5 parts by weight
Silica sand 76.4 parts by weight
Glass long fibers 219 parts by weight
Water 1.3 parts by weight
Tin catalyst 0.2 parts by weight
Silicone oil B 0.6 parts by weight

<Production of resin molded body>

First, a mixture obtained by mixing components other than the glass long fibers of the curable resin composition was sprayed onto a bundle of the glass long fibers, and the mixture was impregnated between the glass long fibers with a kneading plate. The glass long fibers containing the mixture were passed through a molding passage (70 mm in height $\times$ 230 mm in width), and molded by being cured while being foamed to obtain a resin molded body (thickness: 70 mm). The density of the obtained resin molded body was 0.71 g/cm$^3$.

(Comparative Example 4)

<Preparation of curable resin composition>

A curable resin composition was prepared by changing the types of compounding components used as described below.
Composition of curable resin composition:

Polyether polyol B 100 parts by weight
Diphenylmethane diisocyanate 127 parts by weight
Glass long fibers 229 parts by weight
Water 1.0 part by weight
Tertiary amine catalyst A 0.3 parts by weight
Tertiary amine catalyst B 0.3 parts by weight
Silicone oil B 0.6 parts by weight

<Production of resin molded body>

A resin molded body (thickness: 140 mm) was obtained in the same manner as in Comparative Example 3 except that the molding passage (150 mm in height $\times$ 230 mm in width) was changed to a molding passage (140 mm in height $\times$ 240 mm in width). The density of the obtained resin molded body was 0.74 g/cm$^3$.

(Evaluation)

(1) Volume content ratios of filler (calcium carbonate particles or silica sand #7) and glass long fibers

The obtained resin molded body was cut into a size of 10 mm in length $\times$ 10 mm in width $\times$ 10 mm in thickness. Using the cut resin molded body, the volume content ratio of the filler (calcium carbonate particles or silica sand #7) in 100 vol% of the resin molded body and the volume content ratio of glass long fibers in 100 vol% of the resin molded body were determined in accordance with the firing method described in JIS K7052.

(2) Expansion ratio of urethane resin

The same evaluation as "(2) Expansion ratio of urethane resin" in Examples 1 to 3 and Comparative Examples 1 and 2 was performed.

(3) Processability

A woodworking drill (blade diameter: 8 mm, material: S45C) was attached to a bench drilling machine, and 50 holes with a cutting depth of 50 mm were drilled in the resin molded body at an interval of about 30 seconds/hole at a rotation speed of 550 rpm.

The weight before and after cutting with the woodworking drill was measured, and the reduced weight was taken as the abrasion amount of the drill. As the abrasion amount of the drill is smaller, the processability is excellent. Even when there is only a difference of 0.01 g in the abrasion amount of the drill, the processability is considerably different.

(4) Flexural strength

Resin molded bodies (thickness: 140 mm) of Example 4 and Comparative Example 4 were prepared. A resin molded body (thickness: 140 mm) obtained by bonding two resin molded bodies (thickness: 70 mm) of Comparative Example 3 was prepared.

The dimensions of the resin molded bodies of Example 4 and Comparative Example 4 were set to be length $\times$ width $\times$ thickness = 1400 mm $\times$ 240 mm $\times$ 140 mm. The dimensions of the resin molded body (bonded resin molded body) of Comparative Example 3 were set to be length $\times$ width $\times$ thickness = 1400 mm $\times$ 230 mm $\times$ 140 mm. Evaluation was performed by a three-point bending test with a distance between fulcrums set to 1120 mm.

A support floor plate was placed on the fulcrum. The dimensions of the support floor plate were set to be length $\times$ width $\times$ thickness = 200 mm $\times$ 280 mm $\times$ 12 mm. The dimensions of the indenter of the loading portion were set to be length $\times$ width $\times$ thickness = 200 mm $\times$ 140 mm $\times$ 12 mm. The angle of the contact surface between the indenter and the resin molded body is R10, and the indenter is chamfered.

The test was measured at a test speed of 2.0 $\pm$ 0.5 mm/min until the resin molded body was broken, the three-point bending strength was calculated from the maximum strength, and the value was taken as the flexural strength.

(5) Compressive strength

The obtained resin molded body was cut into a size of length $\times$ width $\times$ thickness = 40 mm $\times$ 20 mm $\times$ 20 mm to obtain an evaluation sample. The length direction of the evaluation sample was matched with the fiber direction.

The evaluation sample was pressurized at a test speed of 0.5 mm/min in the length direction of the evaluation sample, and a value obtained by dividing the maximum load at that time by the cross-sectional area was taken as the compressive strength.

Results are shown in Table 5.

[Table 5]

| | | Example 4 | Comparative Example 3 | Comparative Example 4 |
|---|---|---|---|---|
| Type of filler | | Calcium carbonate | Silica sand | - |
| Average particle size of filler | μm | 22 | 190 | - |
| Content of filler with respect to 100 parts by weight of total of polyol compound and isocyanate compound | parts by weight | 76.2 | 30.6 | 0 |
| (1) Volume content ratio of filler | vol% | 10 | 9 | 0 |
| (1) Volume content ratio of glass long fibers | vol% | 9 | 25 | 14 |
| (2) Expansion ratio of urethane resin | times | 2.7 | 2.3 | 2.7 |
| (3) Processability (abrasion amount of drill) | g | 0.01 | 0.09 | 0.02 |
| (4) Flexural strength | MPa | 105 | 84 | 104 |
| (5) Compressive strength | MPa | 88 | 56 | 86 |

The resin molded body obtained in Example 4 was evaluated for the "(3) Acid resistance" described above. As a result, the distance (D) to which the calcium carbonate particles dissolve after immersion in the acidic solution A was shorter in Example 4 than in Comparative Examples 1 and 2. The distance (D) to which the calcium carbonate particles dissolve after immersion in the acidic solution B was shorter in Example 4 than in Comparative Example 1.

**EXPLANATION OF SYMBOLS**

1:       Calcium carbonate particles
2:       First raw material
3:       Second raw material
4:       Extruder
5:       Mixing sprayer
7:       First composition
8:       Reinforcing long fiber bundle
11:      Hopper
12:      Belt feeder
21:      First raw material tank
22:      Pump
31:      Second raw material tank
43:      Pump
51:      Pump
61:      Kneading plate
62:      Impregnation plate
63:      Mold
81:      Curable resin composition
91:      Resin molded body
92:      Urethane resin
93:      Reinforcing long fibers
94:      Calcium carbonate particles
100:     Production apparatus

**Claims**

1.  A curable resin composition comprising: a polyol compound; an isocyanate compound; reinforcing long fibers; and calcium carbonate particles,

    an average particle size of the calcium carbonate particles being 8.5 $\mu$m or more, and
    a content of the calcium carbonate particles being 40 parts by weight or more and 240 parts by weight or less with respect to 100 parts by weight of a total of the polyol compound and the isocyanate compound.

2.  The curable resin composition according to claim 1, wherein the average particle size of the calcium carbonate particles is 10 $\mu$m or more.

3.  The curable resin composition according to claim 1 or 2, wherein surfaces of the calcium carbonate particles are not treated with a surface treatment agent.

4.  The curable resin composition according to any one of claims 1 to 3, wherein a fiber length of the reinforcing long fibers is 50 mm or more.

5.  The curable resin composition according to any one of claims 1 to 4, wherein a content of the reinforcing long fibers is 40 parts by weight or more and 380 parts by weight or less with respect to 100 parts by weight of the total of the polyol compound and the isocyanate compound.

6.  The curable resin composition according to any one of claims 1 to 5, wherein the reinforcing long fibers are glass long fibers.

7.  The curable resin composition according to any one of claims 1 to 6, wherein a volume content ratio of the calcium carbonate particles in 100 vol% of the curable resin composition is 6 vol% or more and 19 vol% or less.

8.  The curable resin composition according to any one of claims 1 to 7, comprising a foaming agent.

9. A resin molded body comprising: a urethane resin; reinforcing long fibers; and calcium carbonate particles,

an average particle size of the calcium carbonate particles being 8.5 $\mu$m or more, and
a content of the calcium carbonate particles being 40 parts by weight or more and 240 parts by weight or less with respect to 100 parts by weight of the urethane resin.

10. The resin molded body according to claim 9, wherein the average particle size of the calcium carbonate particles is 10 $\mu$m or more.

11. The resin molded body according to claim 9 or 10, wherein surfaces of the calcium carbonate particles are not treated with a surface treatment agent.

12. The resin molded body according to any one of claims 9 to 11, wherein a volume content ratio of the calcium carbonate particles in 100 vol% of the resin molded body is 6 vol% or more and 19 vol% or less.

13. The resin molded body according to any one of claims 9 to 12, wherein a fiber length of the reinforcing long fibers is 50 mm or more.

14. The resin molded body according to any one of claims 9 to 13, wherein the reinforcing long fibers are glass long fibers.

15. The resin molded body according to any one of claims 9 to 14, wherein a volume content ratio of the calcium carbonate particles in 100 vol% of the resin molded body is 6 vol% or more and 19 vol% or less.

16. The resin molded body according to any one of claims 9 to 15, which is a foamed resin molded body.

17. The resin molded body according to claim 16, wherein an expansion ratio of the urethane resin is 1.1 times or more and 5 times or less.

18. The resin molded body according to any one of claims 9 to 17, which is a crosstie.

19. A method for producing the resin molded body according to any one of claims 9 to 18, the method comprising:

a step of obtaining a first composition containing a polyol compound, an isocyanate compound, and calcium carbonate particles;
an impregnation step of impregnating the first composition between reinforcing long fibers to obtain a curable resin composition; and
a curing step of curing the curable resin composition in a mold,
a content of the calcium carbonate particles in the first composition being 40 parts by weight or more and 240 parts by weight or less with respect to 100 parts by weight of a total of the polyol compound and the isocyanate compound in the first composition.

20. The method for producing the resin molded body according to claim 19, wherein a fiber length of the reinforcing long fibers is 50 mm or more.

21. The method for producing the resin molded body according to claim 19 or 20, wherein in the impregnation step, the first composition is impregnated between the reinforcing long fibers so that a content of the reinforcing long fibers is 20 parts by weight or more and 150 parts by weight or less with respect to 100 parts by weight of the first composition.

22. The method for producing the resin molded body according to any one of claims 19 to 21, wherein the reinforcing long fibers are glass long fibers.

23. The method for producing the resin molded body according to any one of claims 19 to 22, wherein the first composition contains a foaming agent, and
in the curing step, the curable resin composition is foamed and cured in a mold.

24. The method for producing the resin molded body according to any one of claims 19 to 23, which is a method for producing a resin molded body used as a crosstie.

[FIG. 1]

[FIG. 2]

[FIG. 3]

BED-S 15.0 kV WD 12.9 mm    High-PC    Low Vac. x1,500    10 μm

[FIG. 4]

BED-S 15.0 kV WD 12.9 mm High-PC Low Vac. ☐x1,500 10 μm

[FIG. 5]

(a)

(b)

(c)

(d)

[FIG. 6]

(a)

(b)

(c)

(d)

[FIG. 7]

(a)

(b)

(c)

(d)

[FIG. 8]

(a)

(b)

(c)

Sample surface

(d)

[FIG. 9]

(a)

(b)

(c)

(d)

[FIG. 10]

(a)

(b)

(c)

(d)

[FIG. 11]

(a)

(b)

(c)

(d)

[FIG. 12]

Compressive strength before and after immersion at pH 3.5

[FIG. 13]

Rate of decrease in compressive strength before and after immersion at pH 3.5

# INTERNATIONAL SEARCH REPORT

| International application No. |
|---|
| **PCT/JP2024/033679** |

| A. | CLASSIFICATION OF SUBJECT MATTER |
|---|---|

*C08J 5/04*(2006.01)i; *C08G 18/00*(2006.01)i; *C08G 18/08*(2006.01)i; *C08G 18/42*(2006.01)i; *C08G 18/44*(2006.01)i; *C08G 18/48*(2006.01)i; *C08G 18/72*(2006.01)i; *C08K 3/26*(2006.01)i; *C08K 7/14*(2006.01)i; *C08L 75/04*(2006.01)i; *C08G 101/00*(2006.01)n
FI: C08J5/04 CFF; C08K3/26; C08K7/14; C08G18/08 038; C08G18/00 F; C08G18/42; C08G18/44; C08G18/48; C08G18/72; C08L75/04; C08G101:00

According to International Patent Classification (IPC) or to both national classification and IPC

| B. | FIELDS SEARCHED |
|---|---|

Minimum documentation searched (classification system followed by classification symbols)

C08J5/04-5/20,C08J5/24; B29B11/16; B29B15/08-15/14; C08G18/00; C08G18/08; C08G18/42; C08G18/44; C08G18/48; C08G18/72; C08K3/26; C08K7/14; C08L75/04; C08G101/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2019-26819 A (SEKISUI CHEMICAL CO., LTD.) 21 February 2019 (2019-02-21) claims, paragraphs [0005]-[0007], [0044], [0057]-[0073], table 1 | 1-24 |
| A | CN 102731989 A (SHANGHAI POLYMER CHEMICAL CO., LTD.) 17 October 2012 (2012-10-17) claims, paragraphs [0006]-[0007], [0013]-[0013], example 4 | 1-24 |
| A | JP 2020-523225 A (COVESTRO DEUTSCHLAND AG) 06 August 2020 (2020-08-06) claims, paragraph [0036] | 1-24 |
| A | JP 6-55646 A (FUKUI GIYOMOU KABUSHIKI KAISHA) 01 March 1994 (1994-03-01) claims, paragraphs [0002]-[0004], [0008], [0027] | 1-24 |
| P, X | US 2024/0110037 A1 (WILDCARD IP HOLDINGS, LLC) 04 April 2024 (2024-04-04) claims, paragraphs [0033]-[0040], [0045] | 1-3, 5-7, 9-12, 14-15 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 November 2024** | **10 December 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/033679**

| Patent document cited in search report | | | Publication date (day/month/year) | Patent family member(s) | | | Publication date (day/month/year) |
|---|---|---|---|---|---|---|---|
| JP | 2019-26819 | A | 21 February 2019 | (Family: none) | | | |
| CN | 102731989 | A | 17 October 2012 | (Family: none) | | | |
| JP | 2020-523225 | A | 06 August 2020 | US | 2020/0215770 | A1 | |
| | | | | claims, paragraph [0060] | | | |
| | | | | WO | 2018/228972 | A1 | |
| | | | | EP | 3638493 | A1 | |
| | | | | CN | 109016565 | A | |
| JP | 6-55646 | A | 01 March 1994 | (Family: none) | | | |
| US | 2024/0110037 | A1 | 04 April 2024 | (Family: none) | | | |

Form PCT/ISA/210 (patent family annex) (July 2022)

**REFERENCES CITED IN THE DESCRIPTION**

**Patent documents cited in the description**

- WO 2007014332 A2
- JP 2003041013 A
- JP 2001246632 A
- WO 2020054056 A1